(19) Europäisches Patentamt
European Patent Office
Office européen des brevets

(11) EP 4 797 558 A1

# (12) EUROPEAN PATENT APPLICATION
published in accordance with Art. 153(4) EPC

(43) Date of publication:
**26.08.2026 Bulletin 2026/35**

(21) Application number: **24900828.5**

(22) Date of filing: **17.10.2024**

(51) International Patent Classification (IPC):
***H04B 7/06*** *(2006.01)* ***H04B 1/04*** *(2006.01)*
***H01Q 3/36*** *(2006.01)*

(52) Cooperative Patent Classification (CPC):
**H04B 7/04; H01Q 3/36; H04B 1/04; H04B 7/06**

(86) International application number:
**PCT/KR2024/015814**

(87) International publication number:
**WO 2025/121640 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.12.2023 KR 20230177143**
**10.01.2024 KR 20240004170**

(71) Applicant: **Samsung Electronics Co., Ltd.**
**Suwon-si, Gyeonggi-do 16677 (KR)**

(72) Inventors:
- **CHO, Namjun**
**Suwon-si Gyeonggi-do 16677 (KR)**
- **JO, Hyewon**
**Suwon-si Gyeonggi-do 16677 (KR)**
- **NA, Hyoseok**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

## (54) CIRCUIT FOR ADAPTIVELY USING PLURALITY OF ANTENNAS AND ELECTRONIC DEVICE INCLUDING SAME

(57) This electronic device may include a plurality of antennas including a first antenna, a second antenna, a third antenna, and a fourth antenna, and may include a first upward conversion circuit including a first input terminal configured to obtain a first signal on a baseband, a first output terminal configured to output a first radio frequency (RF) signal having a first phase converted from the first signal, a second output terminal configured to output the first RF signal having a second phase converted from the first signal, and a third output terminal configured to output the first RF signal having a third phase converted from the first signal. The first phase, the second phase, and the third phase may be different from each other, and a fourth phase, a fifth phase, and a sixth phase may be different from each other.

101-1
210
201
211
FIRST UP-CONVERTING CIRCUIT
221-1
221-2
221-3
241
242
243
231
202
212
SECOND UP-CONVERTING CIRCUIT
222-1
222-2
222-3
244
245
246
232
ONE OR MORE SWITCHES
291
292
293
294

FIG. 2

EP 4 797 558 A1

## Description

### [Technical Field]

The disclosure relates to a circuit for adaptive use of a plurality of antennas and an electronic device including the same.

### [Background Art]

In a wireless environment (e.g., a cellular communication environment), a beam is used to concentrate a wireless signal (or a radio frequency (RF) signal) transmitted to a receiving device in a specific direction. For example, the wireless signal may be concentrated toward the receiving device. For example, the beam may be formed using a phased array antenna (or a phased antenna array). For example, transmitting the wireless signal via the beam may indicate transmitting the wireless signal using a spatial domain transmission filter.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is described. The electronic device may comprise a plurality of antennas including a first antenna, a second antenna, a third antenna, and a fourth antenna. The electronic device may comprise a first up-converting circuitry including a first input terminal configured to obtain a first signal on a baseband, a first output terminal configured to output a first radio frequency (RF) signal having a first phase, a second output terminal configured to output the first RF signal having a second phase, and a third output terminal configured to output the first RF signal having a third phase, the first RF signal being converted from the first signal, wherein the first phase, the second phase, and the third phase may be different from each other. The electronic device may comprise: second up-converting circuitry including a second input terminal configured to obtain a second signal on a baseband, a fourth output terminal configured to output a second RF signal having a fourth phase, a fifth output terminal configured to output the second RF signal having a fifth phase, and a sixth output terminal configured to output the second RF signal having a sixth phase, the second RF signal being converted from the second signal, wherein the fourth phase, the fifth phase, and the sixth phase may be different from each other. The electronic device may comprise: one or more switches for the first output terminal to be connectable to any one of the plurality of antennas, the second output terminal to be connectable to any one of the plurality of antennas, the third output terminal to be connectable to any one of the plurality of antennas, the fourth output terminal to be connectable to any one of the plurality of antennas, the fifth output terminal to be connectable to any one of the plurality of antennas, and the sixth output terminal to be connectable to any one of the plurality of antennas.

An electronic device is described. The electronic device may comprise: a plurality of antennas including a first antenna, a second antenna, a third antenna, and a fourth antenna. The electronic device may comprise a first down-converting circuitry including a first input terminal configured to obtain a first radio frequency (RF) signal having a first phase, a second input terminal configured to obtain the first RF signal having a second phase, and a third input terminal configured to obtain the first RF signal having a third phase, and a first output terminal configured to output a first signal on a baseband converted from the first RF signal having the first phase, the first RF signal having the second phase, and the first RF signal having the third phase. The electronic device may comprise: second down-converting circuitry including a fourth input terminal configured to obtain a second RF signal having a fourth phase, a fifth input terminal configured to obtain the second RF signal having a fifth phase, and a sixth input terminal configured to obtain the second RF signal having a sixth phase, and a second output terminal configured to output a second signal on a baseband converted from the second RF signal having the fourth phase, the second RF signal having the fifth phase, and the second RF signal having the sixth phase. The electronic device may comprise: one or more switches for the first input terminal to be connectable to any one of the plurality of antennas, the second input terminal to be connectable to any one of the plurality of antennas, the third input terminal to be connectable to any one of the plurality of antennas, the fourth input terminal to be connectable to any one of the plurality of antennas, the fifth input terminal to be connectable to any one of the plurality of antennas, and the sixth input terminal to be connectable to any one of the plurality of antennas.

### [Description of the Drawings]

FIG. 1 illustrates an example of an exemplary electronic device communicating with a second external electronic device using a second beam while communicating with a first external electronic device using a first beam.
FIG. 2 is a simplified block diagram of an exemplary electronic device including up-converting circuits and one or more switches.
FIG. 3 illustrates an example of an up-converting circuit.
FIG. 4 illustrates an example of obtaining first RF signals using a first up-converting circuit.
FIG. 5 illustrates an example of an arrangement of a plurality of antennas.
FIG. 6 is a simplified block diagram of an exemplary electronic device that includes one or more switches including a first switch and a second switch and up-converting circuits.
FIG. 7 is a simplified block diagram of an exemplary electronic device that includes one or more switches including a single switch and up-converting circuits.
FIG. 8 is a simplified block diagram of an exemplary electronic device including down-converting circuits and one or more switches.
FIG. 9 illustrates an example of a down-converting circuit.
FIG. 10 illustrates an example of a connection relationship between components included in a down-converting circuit.
FIG. 11 is a simplified block diagram of an exemplary electronic device including up-converting circuits, down-converting circuits, and one or more switches.
FIG. 12 is a block diagram of an electronic device in a network environment according to various embodiments.

[**Mode for Invention]**

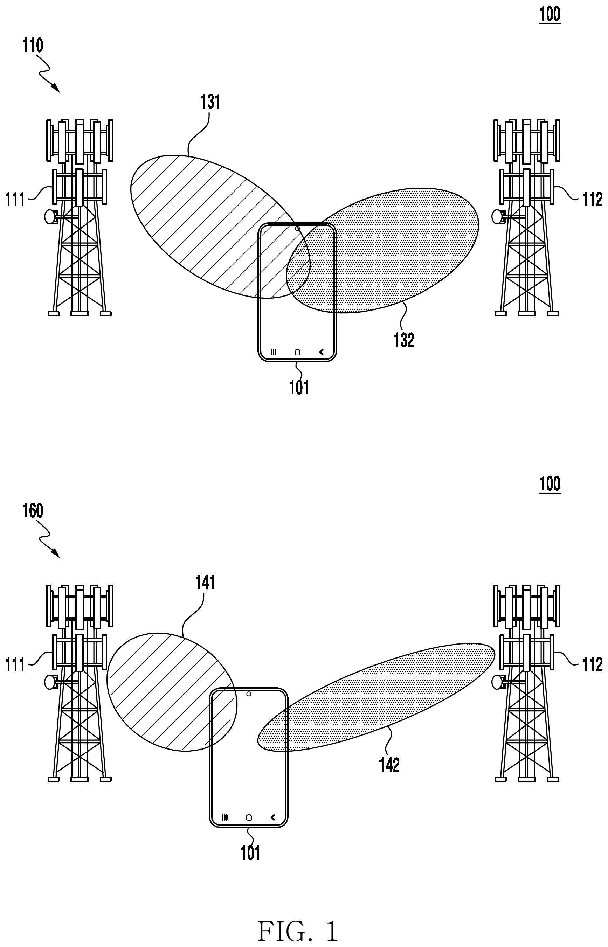

FIG. 1 illustrates an example of an exemplary electronic device communicating with a second transmit/receive point (TRP) using a second beam while communicating with a first TRP using a first beam.

Referring to FIG. 1, a wireless environment 100 (or a cellular communication environment 100) may include an electronic device 101 and a first external electronic device 111. The wireless environment 100 may further include a second external electronic device 112.

The electronic device 101 may refer to a device communicating with the first external electronic device 111. For example, the electronic device 101 may communicate with the first external electronic device 111 for communicate with another electronic device. The electronic device 101 may refer to a device communicating with the second external electronic device 112. For example, the electronic device 101 may communicate with the second external electronic device 112 for communication with another electronic device.

The electronic device 101 may be a mobile electronic device or a portable electronic device. For example, the electronic device 101 may be movable, unlike the first external electronic device 111 and the second external electronic device 112 that are (mainly) fixed. For example, the electronic device 101 may change a posture, unlike the first external electronic device 111 and the second external electronic device 112 that (mainly) maintain the posture.

The electronic device 101 may be referred to as a user equipment (UE).

The first external electronic device 111 may represent a device communicating with the electronic device 101. For example, the first external electronic device 111 may support communication between the electronic device 101 and another electronic device.

Unlike the electronic device 101, the first external electronic device 111 may be (mainly) fixed. Unlike the electronic device 101, the first external electronic device 111 may have a posture that is (mainly) maintained. For example, the first external electronic device 111 may be a base station or a transmit/receive point (TRP). For example, the first external electronic device 111 may be an access point (AP).

Unlike the electronic device 101, the second external electronic device 112 may be (mainly) fixed. Unlike the electronic device 101, the second external electronic device 112 may have a posture that is (mainly) maintained. For example, the second external electronic device 112 may be a base station or a TRP. For example, the second external electronic device 112 may be an AP.

As a non-limiting example, each of the first external electronic device 111 and the second external electronic device 112 may be a TRP included in a base station. As a non-limiting example, the first external electronic device 111 may be a first base station or a TRP (or AP) within the first base station, and the second external electronic device 112 may be a second base station different from the first base station or a TRP (or AP) within the second base station.

Such as a state 110, the electronic device 101 may communicate with the first external electronic device 111 via a first beam 131. As a non-limiting example, the communication with the first external electronic device 111 may be performed on a frequency range 3 (FR3) (e.g., a frequency range of about 7 gigahertz (GHz) to 20 GHz, or a frequency range of about 7.125 GHz to 24.25 GHz) between a frequency range 1 (FR1) and a frequency range 2 (FR2), via the first beam 131.

For example, the first beam 131 may be used to transmit a signal to the first external electronic device 111. As a

non-limiting example, transmitting the signal to the first external electronic device 111 via the first beam 131 may indicate transmitting the signal to the first external electronic device 111 using a spatial domain transmission filter. For example, the first beam 131 may be used to receive a signal from the first external electronic device 111. As a non-limiting example, receiving the signal from the first external electronic device 111 via the first beam 131 may indicate receiving the signal from the first external electronic device 111 using a spatial domain reception filter.

Such as the state 110, the electronic device 101 may communicate with the second external electronic device 112 via a second beam 132. As a non-limiting example, the communication with the second external electronic device 112 may be performed on FR3 between FR1 and FR2 via the second beam 132.

For example, the second beam 132 may be used to transmit a signal to the second external electronic device 112. As a non-limiting example, transmitting the signal to the second external electronic device 112 via the second beam 132 may indicate transmitting the signal to the second external electronic device 112 using a spatial domain transmission filter. For example, the second beam 132 may be used to receive a signal from the second external electronic device 112. As a non-limiting example, receiving the signal from the second external electronic device 112 via the second beam 132 may indicate receiving the signal from the second external electronic device 112 using a spatial domain reception filter.

For example, such as the state 110, the electronic device 101 may communicate with the second external electronic device 112 via the second beam 132 while communicating with the first external electronic device 111 via the first beam 131. As a non-limiting example, communicating with the second external electronic device 112 via the second beam 132 while communicating with the first external electronic device 111 via the first beam 131 may be performed for cell free multiple input multiple output (CF MIMO (or CF massive-MIMO)) configuring TRPs (or APs) uniformly distributed. For example, time resources used to communicate with the first external electronic device 111 via the first beam 131 may be (substantially) identical/similar to time resources used to communicate with the second external electronic device 112 via the second beam 132. For example, frequency resources used to communicate with the first external electronic device 111 via the first beam 131 may be (substantially) identical/similar to frequency resources used to communicate with the second external electronic device 112 via the second beam 132. For example, each of the first beam 131 and the second beam 132 may be used to enhance (or increase) a network capacity of communication for CF MIMO.

Such as a state 160, the electronic device 101 may communicate with the first external electronic device 111 via a first beam 141. As a non-limiting example, communication with the first external electronic device 111 may be performed on FR3 between FR1 and FR2 via the first beam 141.

For example, the first beam 141 may be used to transmit a signal to the first external electronic device 111. As a non-limiting example, transmitting the signal to the first external electronic device 111 via the first beam 141 may indicate transmitting the signal to the first external electronic device 111 using a spatial domain transmission filter. For example, the first beam 141 may be used to receive a signal from the first external electronic device 111. As a non-limiting example, receiving the signal from the first external electronic device 111 via the first beam 141 may indicate receiving the signal from the first external electronic device 111 using a spatial domain reception filter.

Such as the state 160, the electronic device 101 may communicate with the second external electronic device 112 via a second beam 142. As a non-limiting example, the communication with the second external electronic device 112 may be performed on FR3 between FR1 and FR2 via the second beam 142.

For example, the second beam 142 may be used to transmit a signal to the second external electronic device 112. As a non-limiting example, transmitting the signal to the second external electronic device 112 via the second beam 142 may indicate transmitting the signal to the second external electronic device 112 using a spatial domain transmission filter. For example, the second beam 142 may be used to receive a signal from the second external electronic device 112. As a non-limiting example, receiving the signal from the second external electronic device 112 via the second beam 142 may indicate receiving the signal from the second external electronic device 112 using a spatial domain reception filter.

For example, such as the state 160, the electronic device 101 may communicate with the second external electronic device 112 via the second beam 142 while communicating with the first external electronic device 111 via the first beam 141. As a non-limiting example, communicating with the second external electronic device 112 via the second beam 142 while communicating with the first external electronic device 111 via the first beam 141 may be performed for CF MIMO. For example, time resources used to communicate with the first external electronic device 111 via the first beam 141 may be (substantially) identical to time resources used to communicate with the second external electronic device 112 via the second beam 142. For example, frequency resources used to communicate with the first external electronic device 111 via the first beam 141 may be (substantially) identical to frequency resources used to communicate with the second external electronic device 112 via the second beam 142. For example, each of the first beam 141 and the second beam 142 may be used to enhance (or increase) a network capacity of communication for CF MIMO.

For example, unlike the first external electronic device 111 and the second external electronic device 112, since the electronic device 101 is movable, a relative positional relationship between the electronic device 101 and the first external electronic device 111 and a relative positional relationship between the electronic device 101 and the second external electronic device 112 may be changed according to a position of the electronic device 101, like the state 110 and the state 160. For example, since a relative positional relationship between the electronic device 101 and the first external

electronic device 111 in the state 160 is different from a relative positional relationship between the electronic device 101 and the first external electronic device 111 in the state 110, the first beam 141 in the state 160 may be at least partially different from the first beam 131 in the state 110. For example, one or more antennas of the electronic device 101 used to form the first beam 141 in the state 160 may be at least partially different from one or more antennas of the electronic device 101 used to form the first beam 131 in the state 110. For example, since a relative positional relationship between the electronic device 101 and the second external electronic device 112 in the state 160 is different from a relative positional relationship between the electronic device 101 and the second external electronic device 112 in the state 110, the second beam 142 in the state 160 may be at least partially different from the second beam 141 in the state 110. For example, one or more antennas of the electronic device 101 used to form the second beam 142 in the state 160 may be at least partially different from one or more antennas of the electronic device 101 used to form the second beam 132 in the state 110.

On the other hand, as a non-limiting example, unlike the first external electronic device 111 and the second external electronic device 112, since the electronic device 101 is movable, a size of the electronic device 101 may be limited. For example, since the size of the electronic device 101 is limited, the number of a plurality of antennas capable of being included in the electronic device 101 may be limited.

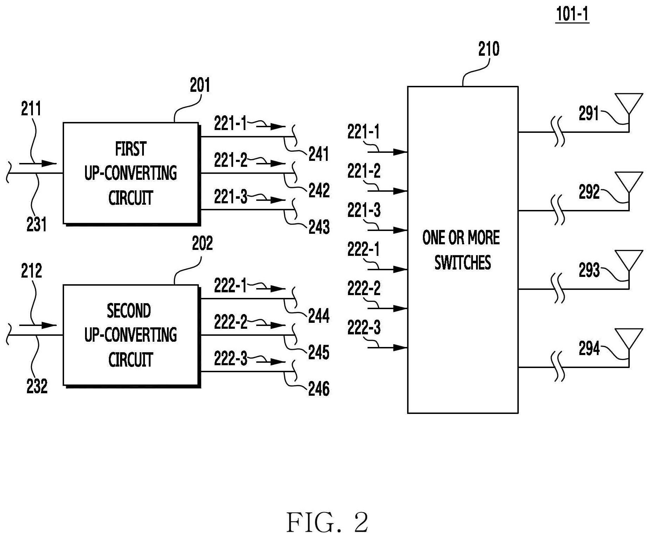

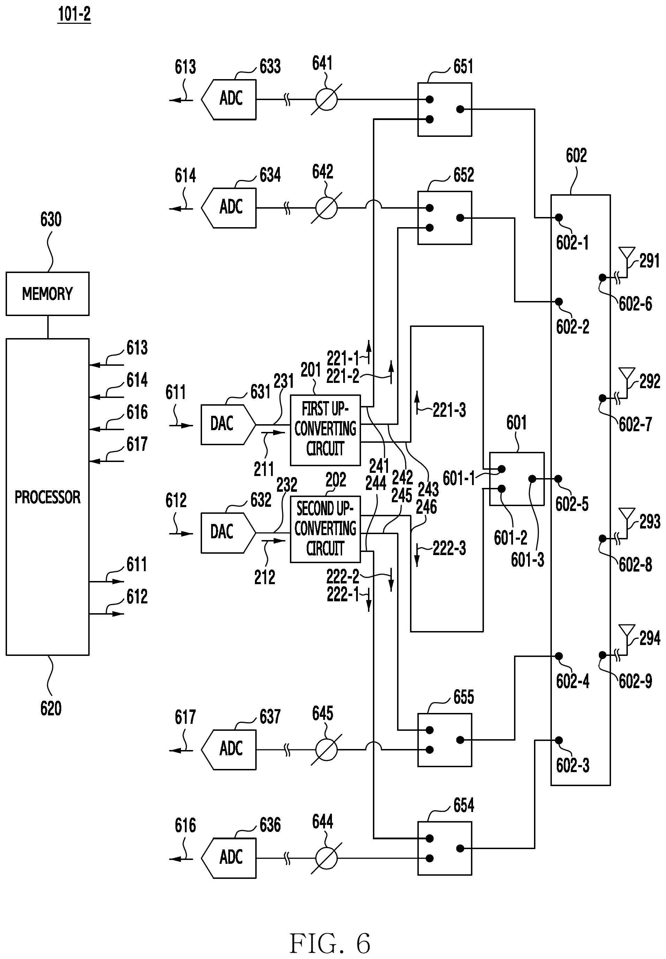

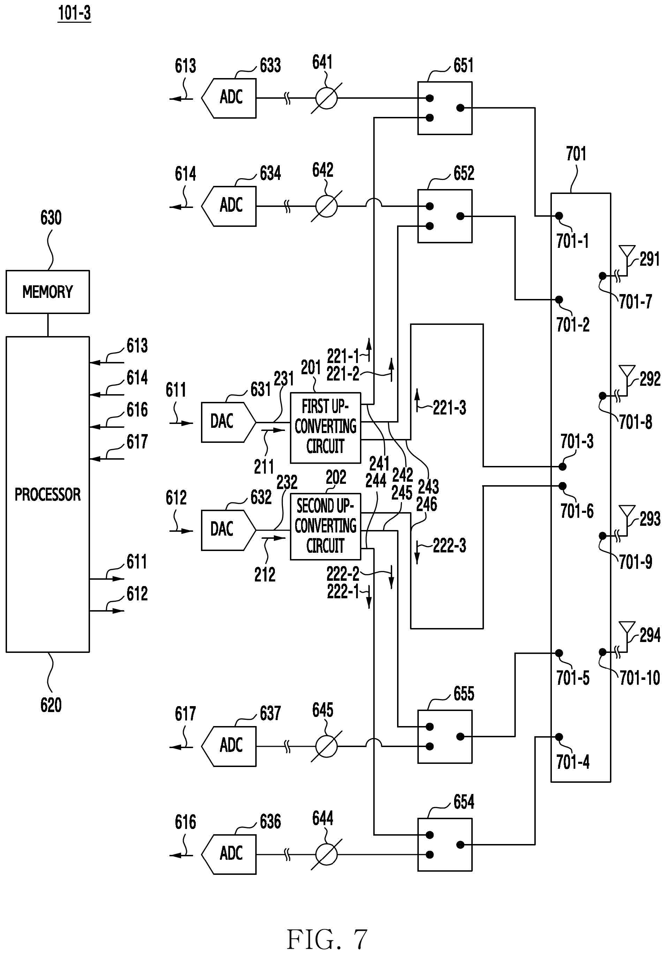

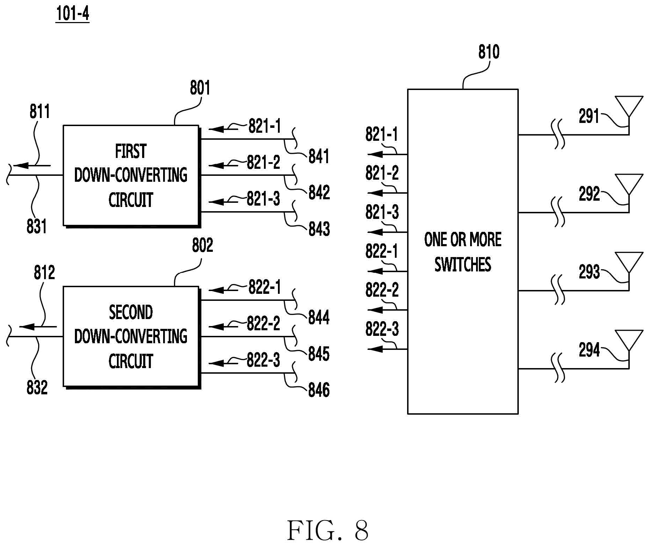

As illustrated above, although the number of the plurality of antennas of the electronic device 101 is limited, an ability forming various beams in the electronic device 101 may be required for communication between the electronic device 101 and an external electronic device (or each of the external electronic devices) (e.g., the first external electronic device 111 and/or the second external electronic device 112). The electronic device 101 illustrated below may have an ability forming various beams using at least a portion of the plurality of antennas of the electronic device 101. For example, an electronic device 101-1 of FIG. 2, an electronic device 101-2 of FIG. 6, an electronic device 101-3 of FIG. 7, and an electronic device 101-4 of FIG. 8 may include components for variously combining the plurality of antennas of the electronic device 101 to form various beams.

FIG. 2 is a simplified block diagram of an exemplary electronic device including up-converting circuits and one or more switches.

Referring to FIG. 2, an electronic device 101-1 may include a plurality of antennas including a first antenna 291, a second antenna 292, a third antenna 293, and a fourth antenna 294. The electronic device 101-1 may include a first up-converting circuit 201. The electronic device 101-1 may include a second up-converting circuit 202. The electronic device 101-1 may include one or more switches 210.

At least a portion of the first antenna 291, the second antenna 292, the third antenna 293, and the fourth antenna 294 may be used as an array antenna (or array antennas) (or phased array antenna(s)) with a function (or feature) of electronic steering without physical movement of the antenna. As a non-limiting example, a phase difference between one or more signals respectively radiated from one or more antennas from among the first antenna 291, the second antenna 292, the third antenna 293, and the fourth antenna 294 may cause such electronic steering.

A type of a portion of the plurality of antennas including the first antenna 291, the second antenna 292, the third antenna 293, and the fourth antenna 294 may be different from a type of another portion of the plurality of antennas including the first antenna 291, the second antenna 292, the third antenna 293, and the fourth antenna 294.

The first antenna 291, the second antenna 292, the third antenna 293, and the fourth antenna 294 are described in more detail within the description of FIG. 6.

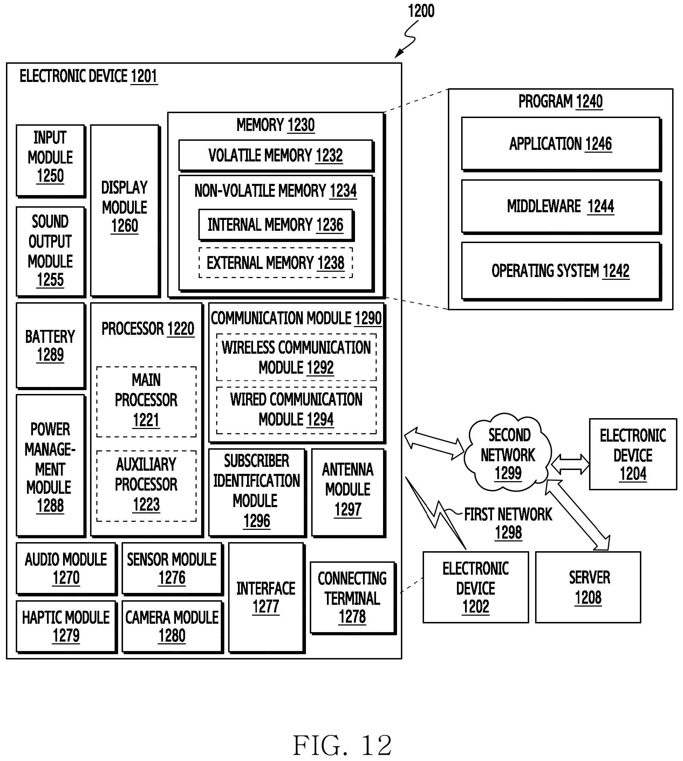

A first up-converting circuit (or up-converting (or up-conversion) circuitry) 201 may be configured to obtain a first signal 211 on a baseband. For example, the first signal 211 may be generated by a processor (not illustrated) (e.g., application processor (AP) or communication processor (CP) including processing circuitry) (e.g., including at least a portion of a processor 1220 of FIG. 12) of the electronic device 101-1, and provided from the processor. For example, the first signal 211 may include information (e.g., control information and/or user data) to be provided to an external electronic device (or external electronic devices) (e.g., a first external electronic device 111 and/or a second external electronic device 112).

The first up-converting circuit 201 may be configured to output one or more first radio frequency (RF) signals converted (or up-converted) from the first signal 211. For example, the first up-converting circuit 201 may be configured to output a first RF signal 221-1 converted from the first signal 211 and having a first phase, a first RF signal 221-2 converted from the first signal 211 and having a second phase different from the first phase, and/or a first RF signal 221-3 converted from the first signal 211 and having a third phase different from the first phase and/or the second phase. For example, the first RF signal 221-1, the first RF signal 221-2, and/or the first RF signal 221-3 output from the first up-converting circuit 201 may be provided to a portion of the plurality of antennas, for transmission (or transmissions) to the external electronic device (or the external electronic devices). For example, the first RF signal 221-1, the first RF signal 221-2, and/or the first RF signal 221-3 output from the first up-converting circuit 201 may include information (substantially) corresponding to the information included in the first signal 211.

The first up-converting circuit 201 may include a first input terminal 231 (or input electrode 231) (or input end 231) configured to obtain the first signal 211, a first output terminal 241 (or output electrode 241) (or output end 241) configured to output the first RF signal 221-1, a second output terminal 242 configured to output the first RF signal 221-2, and a third

output terminal 243 configured to output the first RF signal 221-3.

The second up-converting circuit 202 may be configured to obtain a second signal 212 on a baseband. For example, the second signal 212 may be generated by the processor of the electronic device 101-1 and provided from the processor. For example, the second signal 212 may include information (e.g., control information and/or user data) to be provided to an external electronic device (or external electronic devices) (e.g., the first external electronic device 111 and/or the second external electronic device 112). As a non-limiting example, the second signal 212 may be substantially identical to the first signal 211, according to a state of transmission to the external electronic device.

The second up-converting circuit 202 may be configured to output one or more second RF signals converted (or up-converted) from the second signal 212. For example, the second up-converting circuit 202 may be configured to output a second RF signal 222-1 converted from the second signal 212 and having a fourth phase, a second RF signal 222-2 converted from the second signal 212 and having a fifth phase different from the fourth phase, and/or a second RF signal 222-3 converted from the second signal 212 and having a sixth phase different from the fourth phase and/or the fifth phase. For example, the fourth phase may be identical to or different from the first phase, according to a state of transmission. For example, the second RF signal 222-1, the second RF signal 222-2, and/or the second RF signal 222-3 output from the second up-converting circuit 202 may be provided to another portion of the plurality of antennas, for transmission (or transmissions) to the external electronic device (or the external electronic devices). For example, the second RF signal 222-1, the second RF signal 222-2, and/or the second RF signal 222-3 output from the second up-converting circuit 202 may include information (substantially) corresponding to the information included in the second signal 212.

The second up-converting circuit 202 may include a second input terminal 232 configured to obtain the second signal 212, a fourth output terminal 244 configured to output the second RF signal 222-1, a fifth output terminal 245 configured to output the second RF signal 222-2, and a sixth output terminal 246 configured to output the second RF signal 222-3.

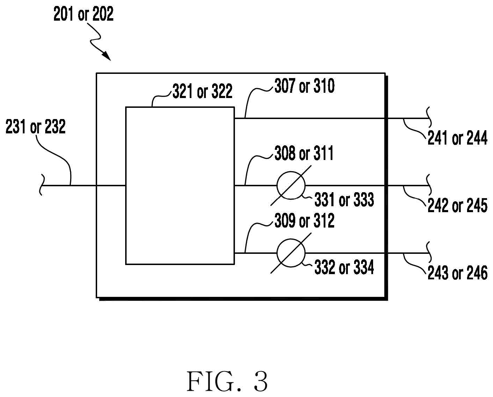

As a non-limiting example, the first up-converting circuit 201 and the second up-converting circuit 202 may be implemented as illustrated in FIG. 3.

FIG. 3 illustrates an example of an up-converting circuit.

Referring to FIG. 3, a first up-converting circuit 201 may include a first up-converter 321, a first phase converter 331, and a second phase converter 332. A second up-converting circuit 202 may include a second up-converter 322, a third phase converter 333, and a fourth phase converter 334. Each of the first up-converter 321 and the second up-converter 322 may be more usable for signal distribution. The first up-converter 321 and the second up-converter 322 may be referred to as a first distributor 321 and a second distributor 322, respectively.

For example, the first up-converter 321 (or the second up-converter 322) may be used to up-convert a first signal 211 (or a second signal 212). For example, the first up-converter 321 (or the second up-converter 322) may be configured to generate or obtain a first RF signal (e.g., the first RF signal 221-1) (or the second RF signal (e.g., the second RF signal 222-1), by increasing frequency of the first signal 211 (or the second signal 212) using a local oscillator (LO) related to the first up-converter 321 (or the second up-converter 322). For example, the first RF signal (or the second RF signal) may be output from the first up-converter 321 (or the second up-converter 322).

For example, the first up-converter 321 (or the second up-converter 322) may include a first input terminal 231 (or a second input terminal 232), a seventh output terminal 307 (or a tenth output terminal 310) connected to a first output terminal 241 (or a fourth output terminal 244), an eighth output terminal 308 (or an eleventh output terminal 311), and a ninth output terminal 309 (or a twelfth output terminal 312). For example, the first RF signal (e.g., the first RF signal 221-1) (or the second RF signal (e.g., the second RF signal 222-1)) may be output from at least a portion of the seventh output terminal 307, the eighth output terminal 308, and the ninth output terminal 309 (or at least a portion of the tenth output terminal 310, the eleventh output terminal 311, and the twelfth output terminal 312).

For example, the first RF signal 221-1 (or the second RF signal 222-1) output from the seventh output terminal 307 (or the tenth output terminal 310) may be output through the first output terminal 241 (or the fourth output terminal 244).

As a non-limiting example, unlike the illustration of FIG. 3, the first up-converting circuit 201 (or the second up-converting circuit 202) may further include a phase converter on (or within) a path from the seventh output terminal 307 (or the tenth output terminal 310) to the first output terminal 241 (or the fourth output terminal 244). For example, the phase converter may obtain the first RF signal (or the second RF signal) output from the seventh output terminal 307 (or the tenth output terminal 310), obtain the first RF signal 221-1 (or the second RF signal 222-1) by shifting a phase of the obtained first RF signal (or the obtained second RF signal 222-1), and output the first RF signal 221-1 (or the second RF signal 222-1) through the first output terminal 241 (or the fourth output terminal 244).

For example, the first phase converter 331 (or the third phase converter 333) may be connected to the eighth output terminal 308 (or the eleventh output terminal 311) and connected to the second output terminal 242 (or the fifth output terminal 245). In the present disclosure, component A connected to component B may represent component A directly connected to component B and/or component A connected to component B through component C. For example, unlike the illustration of FIG. 3, the first phase converter 331 (or the third phase converter 333) may be connected to the eighth output terminal 308 (or the eleventh output terminal 311) through another component. For example, unlike the

illustration of FIG. 3, the first phase converter 331 (or the third phase converter 333) may be connected to the second output terminal 242 (or the fifth output terminal 245) through another component.

For example, the first phase converter 331 (or the third phase converter 333) may be configured to obtain the first RF signal (e.g., the first RF signal 221-1) (or the second RF signal (e.g., the second RF signal 222-1)) output from the eighth output terminal 308 (or the eleventh output terminal 311), obtain a first RF signal 221-2 (or a second RF signal 222-2) by shifting a phase (e.g., the first phase (or the fourth phase)) of the first RF signal (e.g., the first RF signal 221-1) (or the second RF signal (e.g., the second RF signal 222-1)) obtained from the eighth output terminal 308 (or the eleventh output terminal 311), and output the first RF signal 221-2 (or the second RF signal 222-2) through the second output terminal 242 (or the fifth output terminal 245).

For example, the second phase converter 332 (or the fourth phase converter 334) may be connected to the ninth output terminal 309 (or the twelfth output terminal 312) and connected to the third output terminal 243 (or the sixth output terminal 246).

For example, the second phase converter 332 (or the fourth phase converter 334) may be configured to obtain the first RF signal (e.g., the first RF signal 221-1) (or the second RF signal (e.g., the second RF signal 222-1)) output from the ninth output terminal 309 (or the twelfth output terminal 312), obtain a first RF signal 221-3 (or a second RF signal 222-3) by shifting a phase (e.g., the first phase (or the fourth phase)) of the first RF signal (e.g., first RF signal 221-1) (or the second RF signal (e.g., the second RF signal 222-1)) obtained from the ninth output terminal 309 (or the twelfth output terminal 312), and output the first RF signal 221-3 (or the second RF signal 222-3) through the third output terminal 243 (or the sixth output terminal 246).

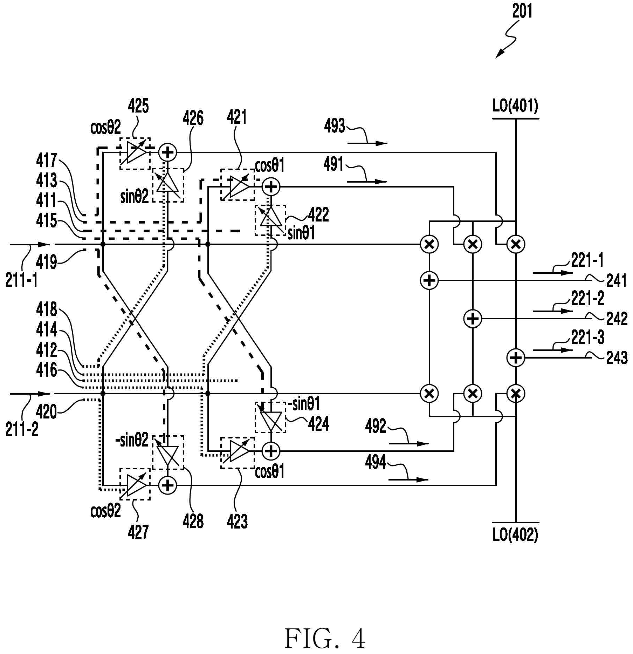

Converting the first signal 211 to each of the first RF signal 221-1, the first RF signal 221-2, and the first RF signal 221-3 using the first up-converting circuit 201 (or converting the second signal 212 to each of the second RF signal 222-1, the second RF signal 222-2, and the second RF signal 222-3 using the second up-converting circuit 202) is illustrated in greater detail below with reference to FIG. 4.

FIG. 4 illustrates an example of obtaining first RF signals using a first up-converting circuit.

Referring to FIG. 4, a first input terminal 231 of a first up-converting circuit 201 may obtain a first signal component 211-1 and a second signal component 211-2. For example, the first signal component 211-1 represents an in-phase component (or signal) for the first signal 211, and the second signal component 211-2 represents a quadrature component (or signal) for the first signal 211.

For example, a first signal component 211-1 passing through a path 411 may be up-converted through a LO 401. For example, a second signal component 211-2 passing through a path 412 may be up-converted through a LO 402. Although not illustrated in FIG. 4, as a non-limiting example, the first up-converting circuit 201 may further include an amplifier (e.g., a programmable amplifier (PA)) configured to adjust gain of the first signal component 211-1 before being up-converted through the LO 401, and an amplifier configured to adjust gain of the second signal component 211-2 before being up-converted through the LO 402.

For example, the first RF signal 221-1 obtained by combining the first signal component 211-1 up-converted through the LO 401 and the second signal component 211-2 up-converted through the LO 402 may be output from the first output terminal 241. The first RF signal 221-1 may be represented as Equation 1 below.

[Equation 1]

$$Tx_PS1 = BB_I \times \cos(w0t) + BB_Q \times \sin(w0t)$$

In Equation 1, $Tx_PS1$ represents the first RF signal 221-1 with the first phase, $BB_I$ represents the first signal component 211-1, $BB_Q$ represents the second signal component 211-2, $\cos(w0t)$ represents a signal from LO 401, and $\sin(w0t)$ represents a signal from LO 402.

For example, a portion of the first signal component 211-1 passing through a path 413 may have the second phase shifted from the first phase through a programmable amplifier (PA) 421. For example, a portion of the second signal component 211-2 passing through a path 414 may have the second phase shifted from the first phase through a PA 422. For example, a signal 491 obtained by combining the portion of the first signal component 211-1 having the second phase and the portion of the second signal component 211-2 having the second phase may be up-converted through the LO 401. As a non-limiting example, the PA 421 may be further used to adjust gain of the portion of the first signal component 211-1, and the PA 422 may be further used to adjust gain of the portion of the second signal component 211-2.

For example, another portion (or remaining portion) of the first signal component 211-1 passing through a path 415 may have the second phase shifted from the first phase through a PA 424. For example, another portion (or remaining portion) of the second signal component 211-2 passing through a path 416 may have the second phase shifted from the first phase through a PA 423. For example, a signal 492 obtained by combining the other portion of the first signal component 211-1 having the second phase and the other portion of the second signal component 211-2 having the second phase may be up-converted through the LO 402. As a non-limiting example, the PA 424 may be further used to adjust gain

of the other portion of the first signal component 211-1, and the PA 423 may be further used to adjust gain of the other portion of the second signal component 211-2.

For example, the first RF signal 221-2 obtained by combining the signal 491 up-converted through the LO 401 and the signal 492 up-converted through the LO 402 may be output from the second output terminal 242. The first RF signal 221-2 may be represented as Equation 2 below.

$$Tx_PS2 = \cos(w0t) \times [BB_I/2 \times \cos\theta1 + BB_Q/2 \times \sin(\theta1)] + \sin w0t \times [-BB_I/2 \times \sin\theta1 + BB_Q/2 \times \cos\theta1] = BB_I \times \cos(w0t + \theta1) + BB_Q \times \sin(w0t + \theta1) \quad \text{[Equation 2]}$$

In Equation 2, $Tx_PS2$ represents the first RF signal 221-2 with the second phase, $BB_I$ represents the first signal component 211-1, and $BB_Q$ represents the second signal component 211-2, $[BB_I/2 \times \cos\theta1 + BB_Q/2 \times \sin(\theta1)]$ represents the signal 491, and $[-BB_I/2 \times \sin\theta1 + BB_Q/2 \times \cos\theta1]$ represents the signal 492, $\cos(w0t)$ represents a signal from the LO 401, $\sin(w0t)$ represents a signal from the LO 402, and $\theta1$ represents the second phase.

As may be identified through $BB_I \times \cos(w0t + \theta1) + BB_Q \times \sin(w0t + \theta1)$ in Equation 2, unlike the first RF signal 221-1, the first RF signal 221-2 may have the second phase.

For example, a portion of the first signal component 211-1 passing through a path 417 may have the third phase shifted from the first phase through a PA 425. For example, a portion of the second signal component 211-2 passing through a path 418 may have the third phase shifted from the first phase through a PA 426. For example, a signal 493 obtained by combining the portion of the first signal component 211-1 having the third phase and the portion of the second signal component 211-2 having the third phase may be up-converted through the LO 401. As a non-limiting example, the PA 425 may be further used to adjust gain of the portion of the first signal component 211-1, and PA 426 may be further used to adjust gain of the portion of the second signal component 211-2.

For example, another portion (or remaining portion) of the first signal component 211-1 passing through a path 419 may have the third phase shifted from the first phase through a PA 428. For example, another part (or remaining part) of the second signal component 211-2 passing through a path 420 may have the third phase shifted from the first phase through a PA 427. For example, a signal 494 obtained by combining the other portion of the first signal component 211-1 having the third phase and the other portion of the second signal component 211-2 having the third phase may be up-converted through the LO 402. As a non-limiting example, the PA 428 may be further used to adjust gain of the other portion of the first signal component 211-1, and the PA 427 may be further used to adjust gain of the other portion of the second signal component 211-2.

For example, a first RF signal 221-3 obtained by combining the signal 493 up-converted through the LO 401 and the signal 494 up-converted through the LO 402 may be output from the third output terminal 243. The first RF signal 221-3 may be represented as illustrated in Equation 3 below.

$$Tx_PS3 = \cos(w0t) \times [BB_I/2 \times \cos\theta2 + BB_Q/2 \times \sin(\theta2)] + \sin w0t \times [-BB_I/2 \times \sin\theta2 + BB_Q/2 \times \cos\theta2] = BB_I \times \cos(w0t + \theta2) + BB_Q \times \sin(w0t + \theta2) \quad \text{[Equation 3]}$$

In Equation 3, $Tx_PS3$ represents the first RF signal 221-3 with the third phase, $BB_I$ represents the first signal component 211-1, $BB_Q$ represents the second signal component 211-2, $[BB_I/2 \times \cos\theta2 + BB_Q/2 \times \sin(\theta2)]$ represents the signal 403, $[-BB_I/2 \times \sin\theta2 + BB_Q/2 \times \cos\theta2]$ represents the signal 494, $\cos(w0t)$ represents a signal from the LO 401, $\sin(w0t)$ represents a signal from the LO 402, and $\theta2$ represents the third phase.

As may be identified through $BB_I \times \cos(w0t + \theta2) + BB_Q \times \sin(w0t + \theta2)$ in Equation 3, unlike the first RF signal 221-1 and the first RF signal 221-2, the first RF signal 221-3 may have the third phase.

As a non-limiting example, since the plurality of antennas (e.g., including a first antenna 291, a second antenna 292, a third antenna 293, and a fourth antenna 294) are spaced apart from each other, a distance of a path from each of the first output terminal 241, the second output terminal 242, the third output terminal 243, the fourth output terminal 244, the fifth output terminal 245, and the sixth output terminal 246 to the first antenna 291, a distance of a path from each of the first output terminal 241, the second output terminal 242, the third output terminal 243, the fourth output terminal 244, the fifth output terminal 245, and the sixth output terminal 246 to the second antenna 292, a distance of a path from each of the first output terminal 241, the second output terminal 242, the third output terminal 243, the fourth output terminal 244, the fifth output terminal 245, and the sixth output terminal 246 to the third antenna 293, a distance of a path from each of the first output terminal 241, the second output terminal 242, the third output terminal 243, the fourth output terminal 244, the fifth output terminal 245, and the sixth output terminal 246 to the fourth antenna 294 may be different from each other. For example, although not illustrated in FIG. 4, the first up-converting circuit 201 may further include one or more PAs to compensate for these distance difference. For example, the one or more PAs may be located on at least a portion of paths related to the first RF signal 221-1, the first RF signal 221-2, and the first RF signal 221-3.

As a non-limiting example, since the plurality of antennas (e.g., including the first antenna 291, the second

antenna 292, the third antenna 293, and the fourth antenna 294) are spaced apart from each other, unintended side lobe may be generated when forming a beam using at least a portion of the plurality of antennas. For example, although not illustrated in FIG. 4, the first up-converting circuit 201 may further include one or more PAs to compensate for the unintended side lobe. For example, the one or more PAs may be located on at least a portion of paths related to the first RF signal 221-1, the first RF signal 221-2, and the first RF signal 221-3.

FIG. 4 illustrates an example of performing up-conversion of the first signal 211 after changing a phase of the first signal 211, but it is merely an example. For example, the first up-converting circuit 201 (or the second up-converting circuit 202) may include components for changing a phase of the first RF signal after obtaining the first RF signal (e.g., the first RF signal 221-1) by up-converting the first signal 211.

Referring back to FIG. 2, the one or more switches 210 may be used to make the first output terminal 241 of the first up-converting circuit 201 connectable to any one of the plurality of antennas (e.g., including the first antenna 291, the second antenna 292, the third antenna 293, and the fourth antenna 294), the second output terminal 242 of the first up-converting circuit 201 connectable to any one of the plurality of antennas, the third output terminal 243 of the first up-converting circuit 201 connectable to any one of the plurality of antennas, the fourth output terminal 244 of the second up-converting circuit 202 connectable to any one of the plurality of antennas, the fifth output terminal 245 of the second up-converting circuit 202 connectable to any one of the plurality of antennas, and the sixth output terminal 246 of the second up-converting circuit 202 connectable to any one of the plurality of antennas. For example, the one or more switches 210 may be included in the electronic device 101-1 to variously combine the plurality of antennas of the electronic device 101-1 to form various beams.

For example, the one or more switches 210 may be configured to respectively connect any four of the first output terminal 241, the second output terminal 242, the third output terminal 243, the fourth output terminal 244, the fifth output terminal 245, and the sixth output terminal 246 to the first antenna 291, the second antenna 292, the third antenna 293, and the fourth antenna 294.

For example, an antenna connected to the first output terminal 241 through one or more switches 210 from among the plurality of antennas may be disconnected through the one or more switches 210 from the second output terminal 242, the third output terminal 243, the fourth output terminal 244, the fifth output terminal 245, and the sixth output terminal 246. For example, an antenna connected to the second output terminal 242 through one or more switches 210 from among the plurality of antennas may be disconnected through the one or more switches 210 from the first output terminal 241, the third output terminal 243, the fourth output terminal 244, the fifth output terminal 245, and the sixth output terminal 246. For example, an antenna connected to the third output terminal 243 through one or more switches 210 from among the plurality of antennas may be disconnected through the one or more switches 210 from the first output terminal 241, the second output terminal 242, the fourth output terminal 244, the fifth output terminal 245, and the sixth output terminal 246. For example, an antenna connected to the fourth output terminal 244 through one or more switches 210 from among the plurality of antennas may be disconnected through the one or more switches 210 from the first output terminal 241, the second output terminal 242, the third output terminal 243, the fifth output terminal 245, and the sixth output terminal 246. For example, an antenna connected to the fifth output terminal 245 through one or more switches 210 from among the plurality of antennas may be disconnected through the one or more switches 210 from the first output terminal 241, the second output terminal 242, the third output terminal 243, the fourth output terminal 244, and the sixth output terminal 246. For example, an antenna connected to the sixth output terminal 246 through one or more switches 210 from among the plurality of antennas may be disconnected through the one or more switches 210 from the first output terminal 241, the second output terminal 242, the third output terminal 243, the fourth output terminal 244, and the fifth output terminal 245.

For example, although not illustrated in FIG. 2, the electronic device 101-1 may further include memory. For example, the memory may include at least a portion of memory 730 (or nonvolatile memory 734) of FIG. 7. For example, the memory may be implemented as a system on chip (SoC). For example, a portion of the memory may be included in a first component of the electronic device 101-1, and another portion of the memory may be included in a second component of the electronic device 101-1, which is different from the first component. For example, the memory may include cache memory, register, random access memory (RAM), solid state drive (SSD), and/or hard disk drive (HDD). As a non-limiting example, in order to perform the operations illustrated in the present disclosure, the memory may represent not only a memory device included in the processor, the first up-converting circuit 201, the second up-converting circuit 202, and/or the one or more switches 210 of the electronic device 101-1, but also a memory device located outside the processor, the first up-converting circuit 201, the second up-converting circuit 202, and/or the one or more switches 210 of the electronic device 101-1.

For example, the memory may store instructions. The instructions may be executed by the processor (e.g., an application processor (AP) and/or a communication processor (CP)). For example, the instructions, when executed by at least one processor, individually and/or collectively, may cause the one or more switches to disconnect the plurality of antennas from all of the first output terminal 241, the second output terminal 242, the third output terminal 243, the fourth output terminal 244, the fifth output terminal 245, and the sixth output terminal 246, form a first transmit (Tx) path between

one of the plurality of antennas and one of the first output terminal 241, the second output terminal 242, the third output terminal 243, the fourth output terminal 244, the fifth output terminal 245, and the sixth output terminal 246, further form a second Tx path between another one of the plurality of antennas and another one of the first output terminal 241, the second output terminal 242, the third output terminal 243, the fourth output terminal 244, the fifth output terminal 245, and the sixth output terminal 246, while the first Tx path is formed, further form a third Tx path between also another one of the plurality of antennas and also another one of the first output terminal 241, the second output terminal 242, the third output terminal 243, the fourth output terminal 244, the fifth output terminal 245, and the sixth output terminal 246, while the first Tx path and the second Tx path are formed, further form a fourth Tx path between still also another one of the plurality of antennas and still also another one of the first output terminal 241, the second output terminal 242, the third output terminal 243, the fourth output terminal 244, the fifth output terminal 245, and the sixth output terminal 246, while the first Tx path, the second Tx path, and the third Tx path are formed.

For example, the one or more switches 210 may be configured to form one path to provide one RF signal from among the first RF signal 221-1, the first RF signal 221-2, the first RF signal 221-3, the second RF signal 222-1, the second RF signal 222-2, and the second RF signal 222-3 to one antenna from among the first antenna 291, the second antenna 292, the third antenna 293, and the fourth antenna 294. For example, the one or more switches 210 may be configured to form two paths to respectively provide two RF signals from among the first RF signal 221-1, the first RF signal 221-2, the first RF signal 221-3, the second RF signal 222-1, the second RF signal 222-2, and the second RF signal 222-3 to two antennas from among the first antenna 291, the second antenna 292, the third antenna 293, and the fourth antenna 294. For example, the one or more switches 210 may be configured to form three paths to respectively provide three RF signals from among the first RF signal 221-1, the first RF signal 221-2, the first RF signal 221-3, the second RF signal 222-1, the second RF signal 222-2, and the second RF signal 222-3 to three antennas from among the first antenna 291, the second antenna 292, the third antenna 293, and the fourth antenna 294. For example, the one or more switches 210 may be configured to form four paths to respectively provide four RF signals from among the first RF signal 221-1, the first RF signal 221-2, the first RF signal 221-3, the second RF signal 222-1, the second RF signal 222-2, and the second RF signal 222-3 to four antennas from among the first antenna 291, the second antenna 292, the third antenna 293, and the fourth antenna 294.

For example, as illustrated in the example of FIG 1, the one or more switches 210 may be used to form a first beam (e.g., a first beam 131 or a first beam 141) used for communication with a first external electronic device 111 and a second beam (e.g., a second beam 132 or a second beam 142) used for communication with a second external electronic device 112 executed through the first beam while performing the communication with the first external electronic device 111.

For example, while communicating with the first external electronic device 111 through the first beam formed in accordance with providing one of the first RF signal 221-1, the first RF signal 221-2, and the first RF signal 221-3 to one of the first antenna 291, the second antenna 292, the third antenna 293, and the fourth antenna 294 through the one or more switches 210, the second beam may be formed in accordance with providing all of the second RF signal 222-1, the second RF signal 222-2, and the second RF signal 222-3 to remaining antennas through the one or more switches 210 (e.g., when one of the first RF signal 221-1, the first RF signal 221-2, and the first RF signal 221-3 is provided to the first antenna 291, the remaining antennas are the second antenna 292, the third antenna 293, and the fourth antenna 294).

For example, while communicating with the first external electronic device 111 through the first beam formed in accordance with providing two of the first RF signal 221-1, the first RF signal 221-2, and the first RF signal 221-3 to two of the first antenna 291, the second antenna 292, the third antenna 293, and the fourth antenna 294 through the one or more switches 210, the second beam may be formed in accordance with providing two of the second RF signal 222-1, the second RF signal 222-2, and the second RF signal 222-3 to remaining antennas through the one or more switches 210 (e.g., when two RF signals of the first RF signal 221-1, the first RF signal 221-2, and the first RF signal 221-3 are provided to the first antenna 291 and the third antenna 293, the remaining antennas are the second antenna 292 and the fourth antenna 294).

For example, while communicating with the first external electronic device 111 through the first beam formed in accordance with providing three of the first RF signal 221-1, the first RF signal 221-2, and the first RF signal 221-3 to three of the first antenna 291, the second antenna 292, the third antenna 293, and the fourth antenna 294 through the one or more switches 210, the second beam may be formed in accordance with providing one of the second RF signal 222-1, the second RF signal 222-2, and the second RF signal 222-3 to a remaining antenna through the one or more switches 210 (e.g., when the first RF signal 221-1, the first RF signal 221-2, and the first RF signal 221-3 are provided to the first antenna 291, the third antenna 293, and the fourth antenna 294, the remaining antennas are the third antenna 292).

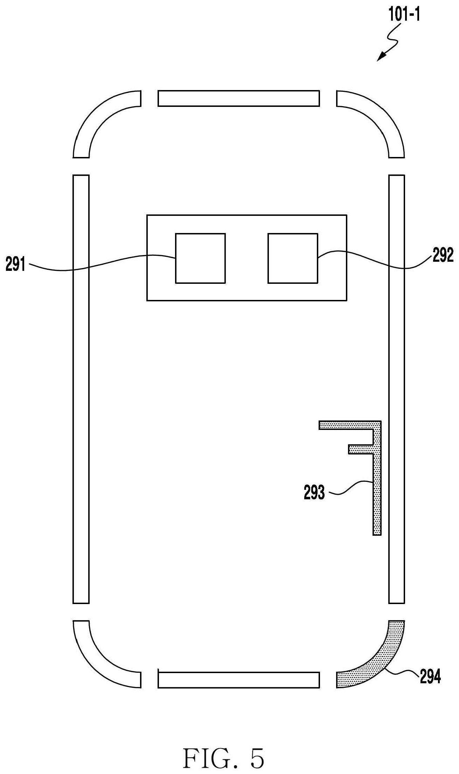

For example, an attribute of a portion of the plurality of antennas may be different from an attribute of another portion of the plurality of antennas, in order to variously form the first beam and/or the second beam. For example, a type of a portion of the plurality of antennas may be different from a type of another portion of the plurality of antennas. For example, the plurality of antennas may be spaced apart from each other. For example, the plurality of antennas may be heterogeneous. The plurality of heterogeneous antennas are illustrated in greater detail below with reference to FIG 5 .

FIG. 5 illustrates an example of an arrangement of a plurality of antennas.

Referring to FIG. 5, according to an embodiment, a first antenna 291 and a second antenna 292 in an electronic device 101 may be patch antennas located in a housing forming (or defining) an appearance of the electronic device 101. FIG. 5 illustrates the first antenna 291 and the second antenna 292 right next to the first antenna 291, but it is merely an example.

According to an embodiment, a third antenna 293 in the electronic device 101 may have another type distinguished from the type of the first antenna 291 and the type of the second antenna 292. For example, the third antenna 293 may be an inverted-f antenna (IFA) implemented as a pattern printed in a flexible printed circuit board (FPCB), unlike first antenna 291 and the second antenna 292, which are the patch antennas.

A fourth antenna 294 in the electronic device 101 may have another type distinguished from the type of the first antenna 291, the type of the second antenna 292, and the type of the third antenna 293. For example, the fourth antenna 294 may be implemented as a portion of a conductive portion of the housing surrounding a display of the electronic device 101-1 forming at least a portion of a front side of the housing. For example, the fourth antenna 294 may be a dipole antenna.

Referring back to FIG. 2, the memory of the electronic device 101-1 may store reference data defining a relationship between a combination of at least a portion of the first RF signal 221-1, the first RF signal 221-2, the first RF signal 221-3, the second RF signal 222-1, the second RF signal 222-2, and the second RF signal 222-3 and a combination of at least a portion of the plurality of antennas. The reference data may be represented as a codebook. A portion of the codebook may be represented as Table 1 below.

[Table 1]

| | | Path1 | | |
|---|---|---|---|---|
| Stream | ID | Phase Code | VGA Index | ANT |
| 1 | 0 | 0 | 0 | 1 |
| | 1 | 0 | 0 | 1 |
| | 2 | 0 | 0 | 1 |
| | ... | ... | ... | ... |
| | M-1 | 0 | 1 | 1 |
| 2 | M | X | X | X |
| | M-1 | X | X | X |
| | M-2 | X | X | X |
| | ... | X | X | X |
| | 2M-1 | X | X | X |

In Table 1, "Stream" represents one or more signals (e.g., the first RF signal 221-1, the first RF signal 221-2, and/or the first RF signal 221-3) caused from the first signal 211, "Beam ID" represents an identifier indicating a beam formed using one or more switches 210 and a first up-converting circuit 201, "Path 1" represents to a path formed using the one or more switches 210, "VGA Index" represents transmission gain of the one or more signals, and "Selected ANT" represents to an antenna used to form a beam.

For example, since the one or more switches 210 may variously combine a portion of output terminals from the first up-converting circuit 201 and a second up-converting circuit 202 with a portion of the plurality of antennas, "Beam ID" in the codebook may be associated with information (e.g., "Selected ANT") on an antenna as well as information on a phase of one or more RF signals generated using at least a portion of the first up-converting circuit 201 and the second up-converting circuit 202, so that one or more paths from at least a portion of the output terminals are formed using the one or more switches 210, for a beam to be formed by the electronic device 101-1. For example, the "Beam ID" in the codebook may be further associated with information (e.g., "VGA Index") on transmission power (or gain of PA) for the beam to be formed by the electronic device 101-1.

As illustrated above, the electronic device 101-1 may communicate with the second external electronic device 112 using the second beam while communicating with the first external electronic device 111 using the first beam. For example, since one or more antennas (and/or one or more paths) used for the first beam cannot be used for the second beam, the memory of the electronic device 101-1 may store pairing data indicating a relationship between a beam and another paired beam. The pairing data may be represented as Table 2 below.

[Table 2]

| Stream1 Beam ID | Pairable Stream2 Beam ID |
|---|---|
| 0 | M+4 |
| | M+6 |
| | M+8 |
| | ... |
| | M+12 |
| 1 | M+5 |
| | M+6 |
| | M+10 |
| | ... |
| | M+15 |
| ... | ... |
| | ... |
| | ... |
| | ... |
| | ... |
| M-1 | M |
| | M+1 |
| | M+4 |
| | ... |
| | M+8 |
| Stream2 Beam ID | Pairable Stream1 Beam ID |
| M | 4 |
| | 5 |
| | 7 |
| | ... |
| | 12 |
| M+1 | 5 |
| | 6 |
| | 10 |
| | ... |
| | 15 |
| ... | ... |
| | ... |
| | ... |
| | ... |
| | ... |

(continued)

| Stream2 Beam ID | Pairable Stream1 Beam ID |
|---|---|
| 2M-1 | 0 |
| | 1 |
| | 2 |
| | ... |
| | 6 |

In Table 2, "Stream1 Beam ID" represents an identifier of the first beam, "Pairable Stream2 Beam ID" represents an identifier of one or more candidate beams capable of being used as the second beam to be paired with the first beam, "Stream2 Beam ID" represents an identifier of the second beam, and "Pairable Stream1 Beam ID" represents an identifier of one or more candidate beams capable of being used as the first beam to be paired with the second beam.

As a non-limiting example, the electronic device 101-1 may further include down-converting circuits. For example, the down-converting circuits may be arranged in association with one or more switches 210.

For example, the electronic device 101-1 may include a first down-converting circuit. The first down-converting circuit will be illustrated in a description of FIG. 8. The first down-converting circuit may include a third input terminal configured to obtain a third RF signal with a seventh phase, a fourth input terminal configured to obtain the third RF signal with an eighth phase, a fifth input terminal configured to obtain the third RF signal with a ninth phase, and a seventh output terminal configured to output a third signal on a baseband converted from the third RF signal with the seventh phase, the third RF signal with the eighth phase, and the third RF signal with the ninth phase.

For example, the electronic device 101-1 may include a second down-converting circuit. The second down-converting circuit may include a sixth input terminal configured to obtain a fourth RF signal with a tenth phase, a seventh input terminal configured to obtain the fourth RF signal with an eleventh phase, an eighth input terminal configured to obtain the fourth RF signal with a twelfth phase, and an eighth output terminal configured to output a fourth signal on a baseband converted from the fourth RF signal with the tenth phase, the fourth RF signal with the eleventh phase, and the fourth RF signal with the twelfth phase.

For example, when the electronic device 101-1 includes the first down-converting circuit and the second down-converting circuit, the one or more switches 210 may be further usable for the third input terminal connectable to any one of the plurality of antennas (e.g., further including a first antenna 291, a second antenna 292, a third antenna 293, and a fourth antenna 294), the fourth input terminal connectable to any one of the plurality of antennas, the fifth input terminal connectable to any one of the plurality of antennas, the sixth input terminal connectable to any one of the plurality of antennas, the seventh input terminal connectable to any one of the plurality of antennas, and the eighth input terminal connectable to any one of the plurality of antennas.

The one or more switches 210 may be implemented in various ways. For example, the one or more switches 210 may be implemented with a plurality of switches. For example, the one or more switches 210 may be implemented as a single switch. An electronic device including the one or more switches 210 implemented with the plurality of switches will be illustrated in a description of FIG. 6, and an electronic device including the one or more switches 210 implemented as a single switch will be illustrated in greater detail below with reference to FIG. 7.

FIG. 6 is a simplified block diagram of an exemplary electronic device that includes one or more switches including a first switch and a second switch and up-converting circuits.

Referring to FIG. 6, an electronic device 101-2 may include a first switch 601 and a second switch 602 corresponding to the one or more switches 210 of the electronic device 101-1.

According to an embodiment, the first switch 601 may include a first terminal 601-1 connected to a third output terminal 243 and a second terminal 601-2 and a third terminal 601-3 connected to a sixth output terminal 246. For example, the first switch 601 may be usable to connect the third terminal 601-3 of the first switch 601 to one of the first terminal 601-1 of the first switch 601 and the second terminal 601-2 of the first switch 601.

According to an embodiment, the second switch 602 may include a first terminal 602-1 connectable to a first output terminal 241, a second terminal 602-2 connectable to a second output terminal 242, a third terminal 602-3 connectable to a fourth output terminal 244, a fourth terminal 602-4 connectable to a fifth output terminal 245, a fifth terminal 602-5 connectable to the third terminal 601-3 of the first switch 601, a sixth terminal 602-6 connectable to a first antenna 291, a seventh terminal 602-7 connectable to a second antenna 292, an eighth terminal 602-8 connectable to a third antenna 293, and/or a ninth terminal 602-9 connectable to a fourth antenna 294. For example, the second switch 602 may be usable for connecting a terminal from among the sixth terminal 602-6 of the second switch 602, the seventh terminal 602-7 of the second switch 602, the eighth terminal 602-8 of the second switch 602, and the ninth terminal 602-9 of the second switch 602 to the first terminal 602-1 of the second switch 602, connecting a terminal from among the sixth

terminal 602-6 of the second switch 602, the seventh terminal 602-7 of the second switch 602, the eighth terminal 602-8 of the second switch 602, and the ninth terminal 602-9 of the second switch 602 to the second terminal 602-2 of the second switch 602, connecting a terminal from among the sixth terminal 602-6 of the second switch 602, the seventh terminal 602-7 of the second switch 602, the eighth terminal 602-8 of the second switch 602, and the ninth terminal 602-9 of the second switch 602 to the third terminal 602-3 of the second switch 602, connecting a terminal from among the sixth terminal 602-6 of the second switch 602, the seventh terminal 602-7 of the second switch 602, the eighth terminal 602-8 of the second switch 602, and the ninth terminal 602-9 of the second switch 602 to the fourth terminal 602-4 of the second switch 602, and connecting a terminal from among the sixth terminal 602-6 of the second switch 602, the seventh terminal 602-7 of the second switch 602, the eighth terminal 602-8 of the second switch 602, and the ninth terminal 602-9 of the second switch 602 to the fifth terminal 602-5 of the second switch 602.

For example, the electronic device 101-2 may include a processor (e.g., including processing circuitry) 620 corresponding to the processor illustrated above and memory 630 corresponding to the memory illustrated above.

For example, the memory 630 may store instructions for controlling the first switch 601 and the second switch 602 to connect the sixth terminal 602-6 of the second switch 602 to the first terminal 602-1 of the second switch 602, to connect the seventh terminal 602-7 of the second switch 602 to the third terminal 602-3 of the second switch 602, to connect the eighth terminal 602-8 of the second switch 602 to the fourth terminal 602-4 of the second switch 602, and to connect the ninth terminal 602-9 of the second switch 602 to the fifth terminal 602-5 of the second switch 602 connected to the third terminal 601-3 of the first switch 601 connected to the second terminal 601-2 of the first switch 601, for transmitting to the second external electronic device 112 information in the second RF signal through a beam formed in accordance with providing a second RF signal 222-1 to the second antenna 292, a second RF signal 222-2 to the third antenna 293, and a second RF signal 222-3 to the fourth antenna 294, while transmitting information in the first RF signal 221-1 to the first external electronic device 111 through a beam formed in accordance with providing the first RF signal 221-1 to the first antenna 291. For example, the instructions may be executed by the processor 620. The processor 620 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

For example, the memory 630 may further store instructions for controlling the second switch 602 to connect the sixth terminal 602-6 of the second switch 602 to the first terminal 602-1 of the second switch 602, to connect the seventh terminal 602-7 of the second switch 602 to the second terminal 602-2 of the second switch 602, to connect the eighth terminal 602-8 of the second switch 602 to the third terminal 602-3 of the second switch 602, and to connect the ninth terminal 602-9 of the second switch 602 to the fourth terminal 602-4 of the second switch 602, while transmitting the information in the first RF signal to a first external electronic device 111 through a beam formed in accordance with providing the first RF signal 221-1 to the first antenna 291 and providing the first RF signal 221-2 to the second antenna 292, for transmitting the information in the second RF signal to a second external electronic device 112 through a beam formed in accordance with providing the second RF signal 222-1 to the third antenna 293 and providing the second RF signal 222-2 to the fourth antenna 294. For example, the instructions may be executed by the processor 620.

For example, the memory 630 may further store instructions for controlling the first switch 601 and the second switch 602 to connect the sixth terminal 602-6 of the second switch 602 to the first terminal 602-1 of the second switch 602, to connect the seventh terminal 602-7 of the second switch 602 to the second terminal 602-2 of the second switch 602, to connect the eighth terminal 602-8 of the second switch 602 to the fifth terminal 602-5 of the second switch 602 connected to the third terminal 601-3 of the first switch 601 connected to the first terminal 601-1 of the first switch 601, and to connect the ninth terminal 602-9 of the second switch 602 to the third terminal 602-3 of the second switch 602, while transmitting the information in the first RF signal to the first external electronic device 111 through a beam formed in accordance with providing the first RF signal 221-1 to the first antenna 291, providing the first RF signal 221-2 to the second antenna 292, and providing the first RF signal 221-3 to the third antenna 293, for transmitting the information in the second RF signal 222-1 to the second external electronic device 112 through a beam formed in accordance with providing the second RF signal 222-1 to the fourth antenna 294. For example, the instructions may be executed by the processor 620.

For example, the memory 630 may further store instructions for controlling the second switch 602 to connect the sixth terminal 602-6 of the second switch 602 to the first terminal 602-1 of the second switch 602, to connect the seventh terminal 602-7 of the second switch 602 to the second terminal 602 of the second switch 602, to connect the eighth terminal 602-8 of the second switch 602 to the third terminal 602-3 of the second switch 602, and to connect the ninth terminal 602-9 of the second switch 602 to the fourth terminal 602-4 of the second switch 602, for transmitting the information in the first RF

signal to the first external electronic device 111 through a beam formed in accordance with providing the first RF signal 221-1 converted from the first signal 211 identical to the second signal 212 to the first antenna 291, providing the first RF signal 221-2 converted from the first signal 211 identical to the second signal 212 to the second antenna 292, providing the second RF signal 222-1 converted from the second signal 212 identical to the first signal 211 to the third antenna 293, and providing the second RF signal 222-2 converted from the second signal 212 identical to the first signal 211 to the fourth antenna 294. For example, the instructions may be executed by the processor 620.

For example, the memory 630 may further store instructions for controlling the second switch 602 to connect the sixth terminal 602-6 of the second switch 602 to the first terminal 602-1 of the second switch 602, to connect the seventh terminal 602-7 of the second switch 602 to the second terminal 602-2 of the second switch 602, to connect the eighth terminal 602-8 of the second switch 602 to the third terminal 602-3 of the second switch 602, and to connect the ninth terminal 602-9 of the second switch 602 to the fourth terminal 602-4 of the second switch 602, for transmitting the information in the second RF signal to the second external electronic device 112 through a beam formed in accordance with providing the first RF signal 221-1 converted from the first signal 211 identical to the second signal 212 to the first antenna 291, providing the first RF signal 221-2 converted from the first signal 211 identical to the second signal 212 to the second antenna 292, providing the second RF signal 222-1 converted from the second signal 212 identical to the first signal 211 to the third antenna 293, and providing the second RF signal 222-2 converted from the second signal 212 identical to the first signal 211 to the fourth antenna 294. For example, the instructions may be executed by the processor 620.

For example, the electronic device 101-2 may include a DAC 631 for the first signal 211 and a DAC 632 for the second signal 212. For example, a digital signal 611 provided from the processor 620 may be converted to the first signal 211 by the DAC 631. For example, a digital signal 612 provided from the processor 620 may be converted to the second signal 212 by the DAC 632. For example, the DAC 631 may be connected to a first input terminal 231. For example, the DAC 632 may be connected to a second input terminal 232.

For example, the electronic device 101-2 may further include components for receiving a signal. For example, the components may be arranged in association with the first switch 601 and the second switch 602.

For example, the electronic device 101-2 may include an ADC 633, an ADC 634, an ADC 636, and an ADC 637 as the components. For example, the ADC 633 may convert an analog signal received through one of the first antenna 291, the second antenna 292, the third antenna 293, and the fourth antenna 294 to a digital signal 613. The digital signal 613 may be provided to the processor 620. For example, the ADC 634 may convert an analog signal received through one of the first antenna 291, the second antenna 292, the third antenna 293, and the fourth antenna 294 to a digital signal 614. The digital signal 614 may be provided to the processor 620. For example, the ADC 636 may convert an analog signal received through one of the first antenna 291, the second antenna 292, the third antenna 293, and the fourth antenna 294 to a digital signal 616. The digital signal 616 may be provided to the processor 620. For example, the ADC 637 may convert an analog signal received through one of the first antenna 291, the second antenna 292, the third antenna 293, and the fourth antenna 294 to a digital signal 617. The digital signal 617 may be provided to the processor 620.

For example, the electronic device 101-2 may further include components for receiving a signal from the outside through a beam. For example, the components may be used to determine at least a portion of the first phase, the second phase, the third phase, the fourth phase, the fifth phase, and the sixth phase.

For example, the electronic device 101-2 may include a phase converter 641 configured to obtain a third RF signal with a seventh phase, a phase converter 642 configured to obtain a third RF signal with an eighth phase, a phase converter 644 configured to obtain a fourth RF signal with a ninth phase, and a phase converter 645 configured to obtain a fourth RF signal with a tenth phase. For example, when the seventh phase corresponds to the first phase and the ninth phase corresponds to the second phase, the phase converter 641 and the phase converter 644 may not be included in the electronic device 101-2.

For example, the phase converter 641 and the phase converter 642 may be replaced with a portion of a first down-converting circuit illustrated in descriptions of FIGS. 8 to 10, and the phase converter 644 and the phase converter 645 may be replaced with a portion of a second down-converting circuit illustrated in description of FIGS. 8 to 10.

For example, after (or immediately after) receiving the third RF signal with the eighth phase through the third antenna 293 using the phase converter 642, the second phase of the first RF signal 221-2 provided to the third antenna 293 may correspond to the eighth phase. However, it is not limited thereto.

For example, the electronic device 101-2 may further include components for time division duplexing (TDD). For example, as the components, the electronic device 101-2 may include a switch 651 configured to connect one of the ADC 633 and the first output terminal 241 to the first terminal 602-1 of the second switch 602, a switch 652 configured to connect one of the ADC 634 and the second output terminal 242 to the second terminal 602-2 of the second switch 602, a switch 654 configured to connect one of the ADC 636 and the fourth output terminal 244 to the third terminal 602-3 of the second switch 602, and a switch 655 configured to connect one of the ADC 637 and the fifth output terminal 245 to the fourth terminal 602-4 of the second switch 602. For example, instructions for controlling the switch 651, the switch 652, the switch 654, and the switch 655 may be stored in the memory 630.

The first switch 601 and the second switch 602 of FIG. 6 may be replaced with a single switch illustrated in FIG. 7.

FIG. 7 is a simplified block diagram of an exemplary electronic device that includes one or more switches including a single switch and up-converting circuits.

Referring to FIG. 7, an electronic device 101-3 may include a switch 701. For example, the first switch 601 and the second switch 602 of the electronic device 101-2 of FIG. 6 may be replaced with the switch 701 of the electronic device 101-3, which may be a single switch.

The switch 701 may include a first terminal 701-1 connected to a first output terminal 241, a second terminal 701-2 connected to a second output terminal 242, a third terminal 701-3 connected to a third output terminal 243, a fourth terminal 701-4 connected to a fourth output terminal 244, a fifth terminal 701-5 connected to a fifth output terminal 245, a sixth terminal 701-6 connected to a sixth output terminal 246, a seventh terminal 701-7 connected to a first antenna 291, an eighth terminal 701-8 connected to a second antenna 292, a ninth terminal 701-9 connected to a third antenna 293, and a tenth terminal 701-10 connected to a fourth antenna 294.

For example, the switch 701 may be usable for connecting, to the first terminal 701-1 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701, connecting, to the second terminal 701-2 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701, connecting, to the third terminal 701-3 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701, connecting, to the fourth terminal 701-4 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701, connecting, to the fifth terminal 701-5 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701, and connecting, to the sixth terminal 701-6 of the switch 701, a terminal from among the seventh terminal 701-7 of the switch 701, the eighth terminal 701-8 of the switch 701, the ninth terminal 701-9 of the switch 701, and the tenth terminal 701-10 of the switch 701.

For example, the memory 630 may store instructions replacing the instructions illustrated in the description of FIG. 6.

For example, the memory 630 may store instructions for controlling the switch 701 to connect the seventh terminal 701-7 of the switch 701 to the first terminal 701-1 of the switch 701, to connect the eighth terminal 701-8 of the switch 701 to the fourth terminal 701-4 of the switch 701, to connect the ninth terminal 701-9 of the switch 701 to the fifth terminal 701-5 of the switch 701, and to connect the tenth terminal 701-10 of the switch 701 to the sixth terminal 701-6 of the switch 701, for transmitting, while transmitting information in a first RF signal 221-1 to a first external electronic device 111 through a beam formed in accordance with providing a first RF signal 221-1 to a first antenna 291, information in a second RF signal to a second external electronic device 112 through a beam formed in accordance with providing a second RF signal 222-1 to a second antenna 292, a second RF signal 222-2 to a third antenna 293, and a second RF signal 222-3 to a fourth antenna 294. The instructions may be executed by the processor 620.

For example, the memory 630 may further store instructions for controlling the switch 701 to connect the seventh terminal 701-7 of the switch 701 to the first terminal 701-1 of the switch 701, to connect the eighth terminal 701-8 of the switch 701 to the second terminal 701-2 of the switch 701, to connect the ninth terminal 701-9 of the switch 701 to the fourth terminal 701-4 of the switch 701, and to connect the tenth terminal 701-10 of the switch 701 to the fifth terminal 701-5 of the switch 701, for transmitting the information in the second RF signal to the second external electronic device 112 through a beam formed in accordance with providing the second RF signal 222-1 to the third antenna 293 and providing the second RF signal 222-2 to the fourth antenna 294, while transmitting the information in the first RF signal to the first external electronic device 111 through a beam formed in accordance with providing the first RF signal 221-1 to the first antenna 291 and providing the first RF signal 221-2 to the second antenna 292. The instructions may be executed by the processor 620.

For example, the memory 630 may further store instructions for controlling the switch 701 to connect the seventh terminal 701-7 of the switch 701 to the first terminal 701-1 of the switch 701, to connect the eighth terminal 701-8 of the switch 701 to the second terminal 701-2 of the switch 701, to connect the ninth terminal 701-9 of the switch 701 to the third terminal 701-3 of the switch 701, and to connect the tenth terminal 701-10 of the switch 701 to the fourth terminal 701-4 of the switch 701, for transmitting the information in the second RF signal 222-1 to the second external electronic device 112 through a beam formed in accordance with providing the second RF signal 222-1 to the fourth antenna 294, while transmitting the information in the first RF signal to the first external electronic device 111 through a beam formed in accordance with providing the first RF signal 221-1 to the first antenna 291, providing the first RF signal 221-2 to the second antenna 292, and providing the first RF signal 221-3 to the third antenna 293. The instructions may be executed by the processor 620.

For example, the memory 630 may further store instructions for controlling the switch 701 to connect the seventh terminal 701-7 of the switch 701 to the first terminal 701-1 of the switch 701, to connect the eighth terminal 701-8 of the

switch 701 to the second terminal 701-2 of the switch 701, to connect the ninth terminal 701-9 of the switch 701 to the fourth terminal 701-4 of the switch 701, and to connect the tenth terminal 701-10 of the switch 701 to the fifth terminal 701-5 of the switch 701, for transmitting the information in the first RF signal to the first external electronic device 111 through a beam formed in accordance with providing the first RF signal 221-1 converted from the first signal 211 identical to the second signal 212 to the first antenna 291, providing the first RF signal 221-2 converted from the first signal 211 identical to the second signal 212 to the second antenna 292, providing the second RF signal 222-1 converted from the second signal 212 identical to the first signal 211 to the third antenna 293, and providing the second RF signal 222-2 converted from the second signal 212 identical to the first signal 211 to the fourth antenna 294. The instructions may be executed by the processor 620.

For example, the memory 630 may further store instructions for controlling the switch 701 to connect the seventh terminal 701-7 of the switch 701 to the first terminal 701-1 of the switch 701, to connect the eighth terminal 701-8 of the switch 701 to the second terminal 701-2 of the switch 701, to connect the ninth terminal 701-9 of the switch 701 to the fourth terminal 701-4 of the switch 701, and to connect the tenth terminal 701-10 of the switch 701 to the fifth terminal 701-5 of the switch 701, for transmitting the information in the second RF signal to the second external electronic device 112 through a beam formed in accordance with providing the first RF signal 221-1 converted from the first signal 211 identical to the second signal 212 to the first antenna 291, providing the first RF signal 221-2 converted from the first signal 211 identical to the second signal 212 to the second antenna 292, providing the second RF signal 222-1 converted from the second signal 212 identical to the first signal 211 to the third antenna 293, and providing the second RF signal 222-2 converted from the second signal 212 identical to the first signal 211 to the fourth antenna 294. The instructions may be executed by the processor 620.

For example, unlike the electronic device 101-1, the electronic device 101-2, and the electronic device 101-3 illustrated above, an electronic device 101 may include only down-converting circuits. The electronic device 101 will be illustrated and described in greater detail below with reference to FIG. 8.

FIG. 8 is a simplified block diagram of an exemplary electronic device including down-converting circuits and one or more switches.

Referring to FIG. 8, an electronic device 101-4 may include a plurality of antennas including a first antenna 291, a second antenna 292, a third antenna 293, and a fourth antenna 294. The electronic device 101-4 may include a first down-converting circuit 801. The electronic device 101-4 may include a second down-converting circuit 802. The electronic device 101-1 may include one or more switches 810.

At least a portion of the first antenna 291, the second antenna 292, the third antenna 293, and the fourth antenna 294 may be used as an array antenna (or array antennas) (or phased array antenna(s)) with a function (or feature) of electronic steering without physical movement of the antenna. As a non-limiting example, a phase difference between one or more signals respectively radiated from one or more antennas from among the first antenna 291, the second antenna 292, the third antenna 293, and the fourth antenna 294 may cause such electronic steering.

A type of a portion of the plurality of antennas including the first antenna 291, the second antenna 292, the third antenna 293, and the fourth antenna 294 may be different from a type of another portion of the plurality of antennas including the first antenna 291, the second antenna 292, the third antenna 293, and the fourth antenna 294.

A first down-converting circuit (or down-converting (or down-conversion) circuitry) 801 may be configured to obtain (or generate) a first signal 811 on a baseband. For example, the first signal 811 may be provided to a processor (not illustrated) (e.g., application processor (AP) or communication processor (CP)) (e.g., including at least a portion of a processor 1220 of FIG. 12). For example, the first signal 811 may include information (e.g., control information and/or user data) to be provided to an external electronic device (or external electronic devices) (e.g., a first external electronic device 111 and/or a second external electronic device 112).

The first down-converting circuit 801 may be configured to output a first signal 811 converted (or down-converted) from one or more first RF signals (e.g., a first RF signal 821-1, a first RF signal 821-2, and/or a first RF signal 821-3). For example, the first down-converting circuit 801 may be configured to obtain a first signal 811 converted from a first RF signal 821-1 with a first phase, a first RF signal 821-2 with a second phase, and/or a first RF signal 821-3 with a third phase. For example, the first signal 811 may be output from the first down-converting circuit 801. For example, the first signal 811 output from the first down-converting circuit 801 may be provided to the processor of the electronic device 101-4. For example, the first signal 811 may include information (substantially) corresponding to the information included in the first RF signal 821-1, the first RF signal 821-2, and/or the first RF signal 821-3.

The first down-converting circuit 801 may include a first input terminal 841 configured to obtain the first RF signal 821-1, a second input terminal 842 configured to obtain the first RF signal 821-2, a third input terminal 843 configured to obtain the first RF signal 821-3, and a first output terminal 831 configured to output the first signal 811 converted from the first RF signal 821-1, the first RF signal 821-2, and the first RF signal 821-3.

The second down-converting circuit 802 may be configured to obtain (or generate) a second signal 812 on a baseband. For example, the second signal 812 may be provided to the processor of the electronic device 101-4. For example, the second signal 812 may include information (e.g., control information and/or user data) provided from an

external electronic device (or external electronic devices) (e.g., the first external electronic device 111 and/or the second external electronic device 112).

The second down-converting circuit 802 may be configured to output a second signal 812 converted (or down-converted) from one or more second RF signals (e.g., a second RF signal 822-1, a second RF signal 822-2, and/or a second RF signal 822-3). For example, the second down-converting circuit 802 may be configured to obtain a second signal 812 converted from the second RF signal 822-1 with a fourth phase, the second RF signal 822-2 with a fifth phase, and/or the second RF signal 822-3 with a sixth phase. For example, the second signal 812 may be output from the second down-converting circuit 802. For example, the second signal 812 output from the second down-converting circuit 802 may be provided to the processor of the electronic device 101-4. For example, the second signal 812 may include information (substantially) corresponding to the information included in the second RF signal 822-1, the second RF signal 822-2, and/or the second RF signal 822-3.

The second down-converting circuit 802 may include a fourth input terminal 844 configured to obtain the second RF signal 822-1, a fifth input terminal 845 configured to obtain the second RF signal 822-2, a sixth input terminal 846 configured to obtain the second RF signal 822-3, and a second output terminal 832 configured to output a second signal 812 converted from the second RF signal 822-1, the second RF signal 822-2, and the second RF signal 822-3.

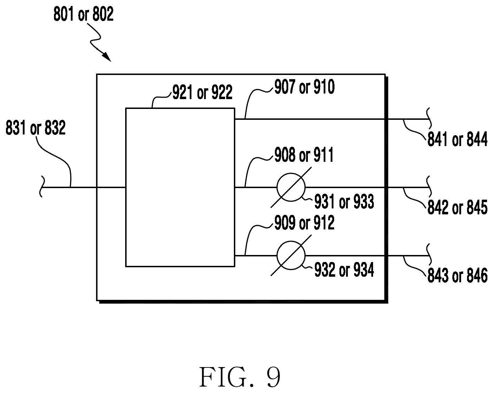

As a non-limiting example, the first down-converting circuit 801 and the second down-converting circuit 802 may be implemented as illustrated and described in greater detail below with reference to FIG. 9.

FIG. 9 illustrates an example of a down-converting circuit.

Referring to FIG. 9, a first down-converting circuit 801 may include a first down-converter 921, a first phase converter 931, and a second phase converter 932. A second down-converting circuit 802 may include a second down-converter 922, a third phase converter 933, and a fourth phase converter 934. Each of the first down-converter 921 and the second down-converter 922 may be further usable for a signal summation. The first down-converter 921 and the second down-converter 922 may be referred to as a first summer 921 and a second summer 922, respectively.

According to an embodiment, the first down-converter 921 (or the second down-converter 922) may include a seventh input terminal 907 (or a tenth input terminal 910), an eighth input terminal 908 (or an eleventh input terminal 911), and a ninth input terminal 909 (or a twelfth input terminal 912).

For example, a first RF signal 821-1 (or a second RF signal 822-1) input through a first input terminal 841 (or a fourth input terminal 844) may be input to the first down-converter 921 (or the second down-converter 922) through the seventh input terminal 907 (or the tenth input terminal 910). For example, the first RF signal 821-1 (or the second RF signal 822-2) may be down-converted by the first down-converter 921 (or the second down-converter 922). For example, the first down-converter 921 (or the second down-converter 922) may obtain a portion of a first signal 811 (or a portion of a second signal 812) down-converted from the first RF signal 821-1 (or the second RF signal 822-1).

For example, the second phase (or the fifth phase) of the first RF signal 821-2 (or the second RF signal 822-2) input through a second input terminal 842 (or a fifth input terminal 845) may be changed to the first phase (or the fourth phase), through the first phase converter 931 (or the third phase converter 933). For example, the first RF signal 821-2 with the first phase (or the second RF signal 822-2 with the fourth phase) may be down-converted by the first down-converter 921) (or the second down-converter 922). For example, the first down-converter 921 (or the second down-converter 922) may obtain a portion of the first signal 811 (or a portion of the second signal 812) down-converted from the first RF signal 821-2 with the first phase (or the second RF signal 822-2 with the fourth phase).

For example, the third phase (or the sixth phase) of the first RF signal 821-3 (or the second RF signal 822-3) input through a third input terminal 843 (or a sixth input terminal 846) may be changed the first phase (or the fourth phase) through the second phase converter 932 (or the fourth phase converter 934). For example, the first RF signal 821-3 with the first phase (or the second RF signal 822-3 with the fourth phase) may be down-converted by the first down-converter 921 (or the second down-converter 922). For example, the first down-converter 921 (or the second down-converter 922) may obtain a portion of the first signal 811 (or a portion of the second signal 812) down-converted from the first RF signal 821-3 with the first phase (or the second RF signal 822-3 with the fourth phase).

For example, the first down-converter 921 (or the second down-converter 922) may obtain the first signal 811 (or the second signal 812) by summing the portion of the first signal 811 (or the portion of the second signal 812) down-converted from the first RF signal 821-1 (or the second RF signal 822-1), the portion of the first signal 811 (or the portion of the second signal 812) down-converted from the first RF signal 821-2 with the first phase (or the second RF signal 822-2 with the fourth phase), and the portion of the first signal 811 (or the portion of the second signal 812) down-converted from the first RF signal 821-3 with the first phase (or the second RF signal 822-3 with the fourth phase), within the first down-converter 921 (or the second down-converter 922). For example, the first signal 811 (or the second signal 812) may be provided to the processor of the electronic device 101-4 through the first output terminal 831 (or the second output terminal 832).

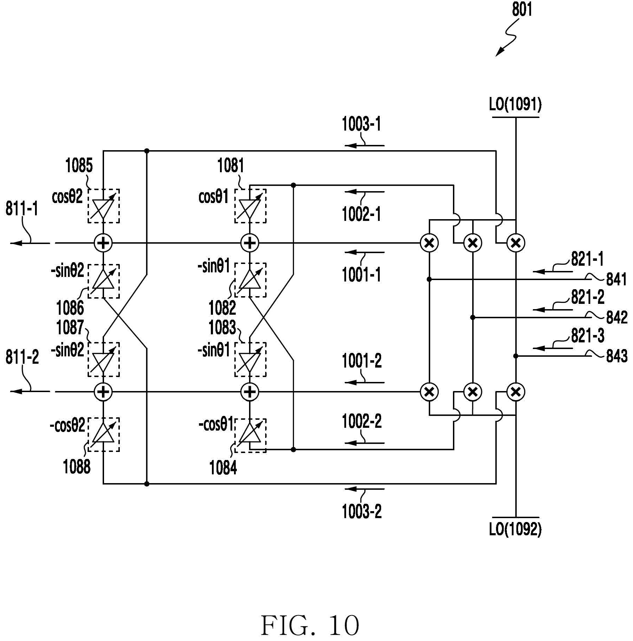

Obtaining the first signal 811 using the first down-converting circuit 801 (or obtaining the second signal 812 using the second down-converting circuit 802) is illustrated in greater detail below with reference to FIG. 10.

FIG. 10 illustrates an example of a connection relationship between components included in a down-converting

circuit.

Referring to FIG. 10, a first input terminal 841 of a first down-converting circuit 801 may obtain a first RF signal 821-1 with the first phase. For example, a first RF signal 821-1 with the first phase may be divided into a first signal component 1001-1 with the first phase and a second signal component 1001-2 with the first phase. For example, the first signal component 1001-1 represents an in-phase component (or signal) for the first RF signal 821-1, and the second signal component 1001-2 represents a quadrature component (or signal) for the first RF signal 821-1.

The first signal component 1001-1 with the first phase may be down-converted through a LO 1091. For example, the second signal component 1001-2 with the first phase may be down-converted through a LO 1092.

Although not illustrated in FIG. 10, as a non-limiting example, the first down-converting circuit 801 may further include an amplifier (e.g., a programmable amplifier (PA)) configured to adjust gain of the first signal component 1001-1 down-converted through the LO 1091 and an amplifier configured to adjust gain of the second signal component 1001-2 down-converted through the LO 1092.

A second input terminal 842 of the first down-converting circuit 801 may obtain a first RF signal 821-2 with the second phase. For example, the first RF signal 821-2 with the second phase may be divided into a first signal component 1002-1 with the second phase and a second signal component 1002-2 with the second phase. For example, the first signal component 1002-1 represents an in-phase component (or signal) for the first RF signal 821-2, and the second signal component 1002-2 represents a quadrature component (or signal) for the first RF signal 821-2.

The first signal component 1002-1 may be down-converted through the LO 1091. For example, the second signal component 1002-2 may be down-converted through the LO 1092.

A third input terminal 843 of the first down-converting circuit 801 may obtain a first RF signal 821-3 with the third phase. For example, the first RF signal 821-3 with the third phase may be divided into a first signal component 1003-1 with the third phase and a second signal component 1003-2 with the third phase. For example, the first signal component 1003-1 represents an in-phase component (or signal) for the first RF signal 821-3, and the second signal component 1003-2 represents a quadrature component (or signal) for the first RF signal 821-3.

The first signal component 1003-1 may be down-converted through the LO 1091. For example, the second signal component 1003-2 may be down-converted through the LO 1092.

For example, a phase of the first signal component 1002-1 down-converted through the LO 1091 may be changed from the second phase to the first phase through a PA 1081. For example, a phase of the second signal component 1002-2 down-converted through the LO 1092 may be changed from the second phase to the first phase through a PA 1082. As a non-limiting example, the PA 1081 may be further used to adjust gain of the first signal component 1002-1, and the PA 1082 may be further used to adjust gain of the second signal component 1002-2.

For example, a phase of the first signal component 1002-1 down-converted through the LO 1091 may be changed from the second phase to the first phase through a PA 1083. For example, a phase of the second signal component 1002-2 down-converted through the LO 1092 may be changed from the second phase to the first phase through a PA 1084. As a non-limiting example, the PA 1083 may be further used to adjust gain of the first signal component 1002-1, and the PA 1084 may be further used to adjust gain of the second signal component 1002-2.

For example, a phase of the first signal component 1003-1 down-converted through the LO 1091 may be changed from the third phase to the first phase through a PA 1085. For example, a phase of the second signal component 1003-2 down-converted through the LO 1092 may be changed from the third phase to the first phase through a PA 1086. As a non-limiting example, the PA 1085 may be further used to adjust gain of the first signal component 1003-1, and the PA 1086 may be further used to adjust gain of the second signal component 1003-2.

For example, a phase of the first signal component 1003-1 down-converted through the LO 1091 may be changed from the third phase to the first phase through a PA 1087. For example, a phase of the second signal component 1003-2 down-converted through the LO 1092 may be changed from the third phase to the first phase through a PA 1088. As a non-limiting example, the PA 1087 may be further used to adjust gain of the first signal component 1003-1, and the PA 1088 may be further used to adjust gain of the second signal component 1003-2.

For example, a first component 811-1 of a first signal 811 may be obtained by summing the first signal component 1001-1 with the first phase, the first signal component 1002-1 with the first phase changed from the second phase through the PA 1081, the second signal component 1002-2 with the first phase changed from the second phase through the PA 1082, the first signal component 1003-1 with the first phase changed from the third phase through the PA 1085, and the second signal component 1003-2 with the first phase changed from the third phase through the PA 1086.

For example, a second component 811-2 of the first signal 811 may be obtained by summing the second signal component 1001-2 with the first phase, the first signal component 1002-1 with the first phase changed from the second phase through the PA 1083, the second signal component 1002-2 with the first phase changed from the second phase through the PA 1084, the first signal component 1003-1 with the first phase changed from the third phase through the PA 1087, and the second signal component 1003-2 with the first phase changed from the third phase through the PA 1088.

For example, the first down-converting circuit 801 may obtain the first signal 811 using the first component 811-1 of the first signal 811 and the second component 811-2 of the first signal 811.

Referring back to FIG. 8, the one or more switches 810 may be used for the first input terminal 841 of the first down-converting circuit 801 connectable to any one of the plurality of antennas (e.g., including the first antenna 291, the second antenna 292, the third antenna 293, and the fourth antenna 294), the second input terminal 842 of the first down-converting circuit 801 connectable to any one of the plurality of antennas, the third input terminal 843 of the first down-converting circuit 801 connectable to any one of the plurality of antennas, the fourth input terminal 844 of the second down-converting circuit 802 connectable to any one of the plurality of antennas, the fifth input terminal 845 of the second down-converting circuit 802 connectable to any one of the plurality of antennas, and the sixth input terminal 846 of the second down-converting circuit 802 connectable to any one of the plurality of antennas. For example, one or more switches 810 may be included in an electronic device 101-4 to variously combine the plurality of antennas of the electronic device 101-4 to form various beams.

For example, the one or more switches 810 may be configured to respectively connect any four of the first input terminal 841, the second input terminal 842, the third input terminal 843, the fourth input terminal 844, the fifth input terminal 845, and the sixth input terminal 846 to the first antenna 291, the second antenna 292, the third antenna 293, and the fourth antenna 294.

For example, an antenna connected to the first input terminal 841 through the one or more switches 810 among the plurality of antennas may be disconnected from the second input terminal 842, the third input terminal 843, the fourth input terminal 844, the fifth input terminal 845, and the sixth input terminal 846, through the one or more switches 810. For example, an antenna connected to the second input terminal 842 through the one or more switches 810 among the plurality of antennas may be disconnected from the first input terminal 841, the third input terminal 843, the fourth input terminal 844, the fifth input terminal 845, and the sixth input terminal 846, through the one or more switches 810. For example, an antenna connected to the third input terminal 843 through the one or more switches 810 among the plurality of antennas may be disconnected from the first input terminal 841, the second input terminal 842, the fourth input terminal 844, the fifth input terminal 845, and the sixth input terminal 846, through the one or more switches 810. For example, an antenna connected to the fourth input terminal 844 through the one or more switches 810 among the plurality of antennas may be disconnected from the first input terminal 841, the second input terminal 842, the third input terminal 843, the fifth input terminal 845, and the sixth input terminal 846, through the one or more switches 810. For example, an antenna connected to the fifth input terminal 845 through the one or more switches 810 among the plurality of antennas may be disconnected from the first input terminal 841, the second input terminal 842, the third input terminal 843, the fourth input terminal 844, and the sixth input terminal 846, through the one or more switches 810. For example, an antenna connected to the sixth input terminal 846 through the one or more switches 810 among the plurality of antennas may be disconnected from the first input terminal 841, the second input terminal 842, the third input terminal 843, the fourth input terminal 844, and the fifth input terminal 845 through the one or more switches 810.

As described above, the one or more switches 810 may perform functions identical or similar to functions of the one or more switches 210 of the electronic device 101-1.

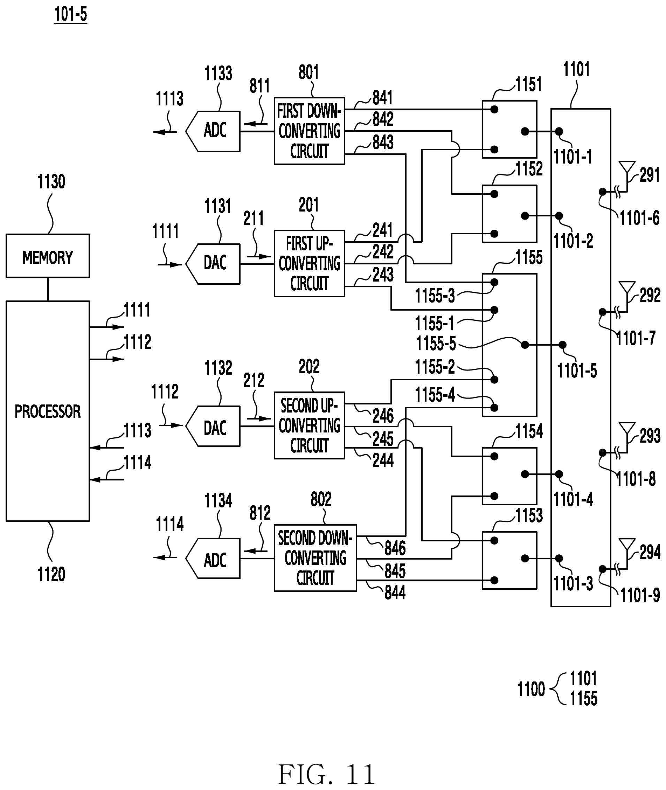

Up-converting circuits (e.g., the first up-converting circuit 201 and the second up-converting circuit 202) and down-converting circuits (e.g., the first down-converting circuit 801 and the second down-converting circuit 802) illustrated above may be included in one electronic device. The electronic device will be illustrated in greater detail below with reference to FIG. 11.

FIG. 11 is a simplified block diagram of an exemplary electronic device including up-converting circuits, down-converting circuits, and one or more switches.

Referring to FIG. 11, an electronic device 101-5 according to an embodiment may include a first up-converting circuit 201, a second up-converting circuit 202, a first down-converting circuit 801, a second down-converting circuit 802, and one or more switches 1100.

For example, the one or more switches 1100 may be used for a first output terminal 241 of the first up-converting circuit 201 connectable to any one of the plurality of antennas (e.g., including the first antenna 291, the second antenna 292, the third antenna 293, and the fourth antenna 294), a second output terminal 242 of the first up-converting circuit 201 connectable to any one of the plurality of antennas, a third output terminal 243 of the first up-converting circuit 201 connectable to any one of the plurality of antennas, a fourth output terminal 244 of the second up-converting circuit 202 connectable to any one of the plurality of antennas, a fifth output terminal 245 of the second up-converting circuit 202 connectable to any one of the plurality of antennas, a sixth output terminal 246 of the second up-converting circuit 202 connectable to any one of the plurality of antennas, a first input terminal 841 of the first down-converting circuit 801 connectable to any one of the plurality of antennas, a second input terminal 842 of the first down-converting circuit 801 connectable to any one of the plurality of antennas, a third input terminal 843 of the first down-converting circuit 801 connectable to any one of the plurality of antennas, a fourth input terminal 844 of the second down-converting circuit 802 connectable to any one of the plurality of antennas, a fifth input terminal 845 of the second down-converting circuit 802 connectable to any one of the plurality of antennas, and a sixth input terminal 846 of the second down-converting circuit 802 connectable to any one of the plurality of antennas. For example, the one or more switches 1100 may be included in the electronic device 101-5 to variously combine the plurality of antennas of the electronic device 101-5 to form various beams

(e.g., various transmission beams and various reception beams).

As a non-limiting example, the one or more switches 1100 may include a switch 1101 and a switch 1155.

For example, the switch 1101 may include a first terminal 1101-1 connectable to the first output terminal 241 or the first input terminal 841, a second terminal 1101-2 connectable to the second output terminal 242 or the second input terminal 842, a third terminal 1101-3 connectable to the fourth output terminal 244 or the fourth input terminal 844, a fourth terminal 1101-4 connectable to the fifth output terminal 245 or the fifth input terminal 845, a fifth terminal 1101-5 connectable to the third output terminal 243, the sixth output terminal 246, the third input terminal 843, or the sixth input terminal 846, a sixth terminal 1101-6 connected to the first antenna 291, the seventh terminal 1101-7 connected to the second antenna 292, an eighth terminal 1101-8 connected to the third antenna 293, and/or a ninth terminal 1101-9 connected to the fourth antenna 294.

For example, the switch 1155 may include a first terminal 1155-1 connected to the third output terminal 243, a second terminal 1155-2 connected to the sixth output terminal 246, a third terminal 1155-3 connected to the third input terminal 843, a fourth terminal 1155-4 connected to the sixth input terminal 846, and/or a fifth terminal 1155-5 connected to the fifth terminal 1101-5 of the switch 1101.

For example, the electronic device 101-5 may further include components for TDD. For example, the electronic device 101-5 may include, as the components, a switch 1151 configured to connect one of the first output terminal 241 and the first input terminal 841 to the first terminal 1101-1 of the switch 1101, a switch 1152 configured to connect one of the second output terminal 242 and the second input terminal 842 to the second terminal 1101-2 of the switch 1101, a switch 1153 configured to connect one of the fourth output terminal 244 and the fourth input terminal 844 to the third terminal 1101-3 of the switch 1101, and/or a switch 1154 configured to connect one of the fifth output terminal 245 and the fifth input terminal 845 to the fourth terminal 1101-4 of the switch 1101.

For example, the electronic device 101-5 may include a processor (e.g., including processing circuitry) 1120 and memory 1130. For example, the processor 1120 may be used to control one or more switches 1100 including the switch 1101 and the switch 1155, the switch 1151, the switch 1152, the switch 1153, and the switch 1154. For example, the memory 1130 may store instructions executed by the processor 1120 to control the one or more switches 1100 including the switch 1101 and the switch 1155, the switch 1151, the switch 1152, the switch 1153, and the switch 1154.

For example, the electronic device 101-5 may include a DAC 1131 for a first signal 211 to be transmitted through the first up-converting circuit 201 and a DAC 1132 for a second signal 212 to be transmitted through the second up-converting circuit 202. For example, a digital signal 1111 provided from the processor 1120 may be converted to the first signal 211 by the DAC 1131. For example, a digital signal 1112 provided from the processor 1120 may be converted to the second signal 212 by the DAC 1132.

For example, the electronic device 101-5 may include an ADC 1133 for a first signal 811 received through the first down-converting circuit 801 and an ADC 1134 for a second signal 812 received through the second down-converting circuit 802. For example, a digital signal 1113 converted from the first signal 811 by the ADC 1133 may be provided to the processor 1120. For example, a digital signal 1114 converted from the second signal 812 by the ADC 1134 may be provided to the processor 1120. The processor 1120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

For example, the processor 1120 may adaptively change a path for the first signal 211, a path for the second signal 212, a path for the first signal 811, and/or a path for the second signal 812 in accordance with a state of a wireless environment, by controlling the one or more switches 1100 including the switch 1101 and the switch 1155, the switch 1151, the switch 1152, the switch 1153, and the switch 1154.

As described above, the electronic device 101-5 may have an ability forming various beams by including the one or more switches 1100 including the switch 1101 and the switch 1155, the switch 1151, the switch 1152, the switch 1153, and the switch 1154.

The operations illustrated above may be caused by an electronic device 1201 illustrated and described in greater detail below with reference to FIG. 12.

FIG. 12 is a block diagram illustrating an electronic device 1201 in a network environment 1200 according to various embodiments. Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless

communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an

embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth™, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g.,

0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element including a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In an embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

As described above, an electronic device may comprise a plurality of antennas including a first antenna, a second antenna, a third antenna, and a fourth antenna. The electronic device may comprise a first up-converting circuitry including a first input terminal configured to obtain a first signal on a baseband, a first output terminal configured to output a first radio frequency (RF) signal with a first phase, a second output terminal configured to output the first RF signal with a second phase, and a third output terminal configured to output the first RF signal with a third phase, the first RF signal being converted from the first signal. The first phase, the second phase, and the third phase may be different from each other. The electronic device may comprise a second up-converting circuitry including a second input terminal configured to obtain a second signal on a baseband, a fourth output terminal configured to output a second RF signal with a fourth phase, a fifth output terminal configured to output the second RF signal with a fifth phase, and a sixth output terminal configured to output the second RF signal with a sixth phase, the second RF signal being converted from the second signal. The fourth phase, the fifth phase, and the sixth phase may be different from each other. The electronic device may comprise one or more switches for the first output terminal connectable to any one of the plurality of antennas, the second output terminal connectable to any one of the plurality of antennas, the third output terminal connectable to any one of the plurality of antennas, the fourth output terminal connectable to any one of the plurality of antennas, the fifth output terminal connectable to any one of the plurality of antennas, and the sixth output terminal connectable to any one of the plurality of antennas.

For example, the one or more switches may be configured to respectively connect, to the first antenna, the second antenna, the third antenna, and the fourth antenna, any four of the first output terminal, the second output terminal, the third output terminal, the fourth output terminal, the fifth output terminal, and the sixth output terminal.

For example, an antenna connected to the first output terminal through the one or more switches from among the

plurality of antennas may be disconnected through the one or more switches from the second output terminal, the third output terminal, the fourth output terminal, the fifth output terminal, and the sixth output terminal, an antenna connected to the second output terminal through the one or more switches from among the plurality of antennas may be disconnected through the one or more switches from the first output terminal, the third output terminal, the fourth output terminal, the fifth output terminal, and the sixth output terminal, an antenna connected to the third output terminal through the one or more switches from among the plurality of antennas may be disconnected through the one or more switches from the first output terminal, the second output terminal, the fourth output terminal, the fifth output terminal, and the sixth output terminal, an antenna connected to the fourth output terminal through the one or more switches from among the plurality of antennas may be disconnected through the one or more switches from the first output terminal, the second output terminal, the third output terminal, the fifth output terminal, and the sixth output terminal, an antenna connected to the fifth output terminal through the one or more switches from among the plurality of antennas may be disconnected through the one or more switches from the first output terminal, the second output terminal, the third output terminal, the fourth output terminal, and the sixth output terminal, and an antenna connected to the sixth output terminal through the one or more switches from among the plurality of antennas may be disconnected through the one or more switches from the first output terminal, the second output terminal, the third output terminal, the fourth output terminal, and the fifth output terminal.

For example, the electronic device may further comprise memory. The memory may store instructions that, when executed by at least one processor, individually and/or collectively, cause the one or more switches to disconnect, from all of the first output terminal, the second output terminal, the third output terminal, the fourth output terminal, the fifth output terminal, and the sixth output terminal, the plurality of antennas, form a first transmit (Tx) path between one of the plurality of antennas and one of the first output terminal, the second output terminal, the third output terminal, the fourth output terminal, the fifth output terminal, and the sixth output terminal, while the first Tx path is formed, further form a second Tx path between another one of the plurality of antennas and another one of the first output terminal, the second output terminal, the third output terminal, the fourth output terminal, the fifth output terminal, and the sixth output terminal, while the first Tx path and the second Tx path are formed, further form a third Tx path between also another one of the plurality of antennas and also another one of the first output terminal, the second output terminal, the third output terminal, the fourth output terminal, the fifth output terminal, and the sixth output terminal, and while the first Tx path, the second Tx path, and the third Tx path are formed, further form a fourth Tx path between still also another one of the plurality of antennas and still also another one of the first output terminal, the second output terminal, the third output terminal, the fourth output terminal, the fifth output terminal, and the sixth output terminal.

For example, the first up-converting circuitry may include a first up-converter including a seventh output terminal connected to the first output terminal to output the first RF signal with the first phase through the first output terminal, an eighth output terminal configured to output the first RF signal with the first phase, and a nineth output terminal configured to output the first RF signal with the first phase, a first phase shifter configured to obtain the first RF signal with the first phase output from the eighth output terminal and obtain the first RF signal with the second phase by shifting the first phase of the first RF signal obtained from the eighth output terminal and respectively connected to the second output terminal and the eighth output terminal to output the first RF signal with the second phase through the second output terminal, and a second phase shifter that is configured to obtain the first RF signal with the first phase output from the nineth output terminal and obtain the first RF signal with the third phase by shifting the first phase of the first RF signal obtained from the nineth output terminal and respectively connected to the third output terminal and the nineth output terminal to output the first RF signal with the third phase through the third output terminal. For example, the second up-converting circuitry may include a second up-converter including a tenth output terminal connected to the fourth output terminal to output the second RF signal with the fourth phase through the fourth output terminal, an eleventh output terminal configured to output the second RF signal with the fourth phase, and a twelfth output terminal configured to output the second RF signal with the fourth phase, a third phase shifter configured to obtain the second RF signal with the fourth phase output from the eleventh output terminal and obtain the second RF signal with the fifth phase by shifting the fourth phase of the second RF signal obtained from the eleventh output terminal and respectively connected to the fifth output terminal and the eleventh output terminal to output the second RF signal with the fifth phase through the fifth output terminal, and a fourth phase shifter configured to obtain the second RF signal with the fourth phase output from the twelfth output terminal and obtain the second RF signal with the sixth phase by shifting the fourth phase of the second RF signal obtained from the twelfth output terminal and respectively connected to the sixth output terminal and the twelfth output terminal to output the second RF signal with the sixth phase through the sixth output terminal.

For example, the one or more switches may include a first switch including a first terminal connected to the third output terminal, a second terminal connected to the sixth output terminal, and a third terminal, and a second switch including a first terminal connected to the first output terminal, a second terminal connected to the second output terminal, a third terminal connected to the fourth output terminal, a fourth terminal connected to the fifth output terminal, and a fifth terminal connected to the third terminal of the first switch, a sixth terminal connected to the first antenna, a seventh terminal connected to the second antenna, an eighth terminal connected to the third antenna, and a nineth terminal connected to the fourth antenna.

For example, the first switch may be configured to connect the third terminal of the first switch to a terminal from among the first terminal of the first switch and the second terminal of the first switch. For example, the second switch may be configured to connect, to the first terminal of the second switch, a terminal from among the sixth terminal of the second switch, the seventh terminal of the second switch, the eighth terminal of the second switch, and the nineth terminal of the second switch, connecting, to the second terminal of the second switch, a terminal from among the sixth terminal of the second switch, the seventh terminal of the second switch, the eighth terminal of the second switch, and the nineth terminal of the second switch, connecting, to the third terminal of the second switch, a terminal from among the sixth terminal of the second switch, the seventh terminal of the second switch, the eighth terminal of the second switch, and the nineth terminal of the second switch, connecting, to the fourth terminal of the second switch, a terminal from among the sixth terminal of the second switch, the seventh terminal of the second switch, the eighth terminal of the second switch, and the nineth terminal of the second switch, and connecting, to the fifth terminal of the second switch, a terminal from among the sixth terminal of the second switch, the seventh terminal of the second switch, the eighth terminal of the second switch, and the nineth terminal of the second switch.

For example, the memory may store instructions that, when executed by at least one processor, individually and/or collectively, control the first switch and the second switch to connect the sixth terminal of the second switch to the first terminal of the second switch, to connect the seventh terminal of the second switch to the third terminal of the second switch, to connect the eighth terminal of the second switch to the fourth terminal of the second switch, and to connect the nineth terminal of the second switch to the fifth terminal of the second switch connected to the third terminal of the first switch connected to the second terminal of the first switch, for transmitting, while transmitting to a first external electronic device information in the first RF signal via a beam formed in accordance with providing the first RF signal with the first phase to the first antenna, to a second external electronic device information in the second RF signal via a beam formed in accordance with providing the second RF signal with the fourth phase to the second antenna, providing the second RF signal with the fifth phase to the third antenna, and providing the second RF signal with the sixth phase to the fourth antenna.

For example, the memory may further store instructions which, when executed by at least one processor, individually and/or collectively, control the second switch to connect the sixth terminal of the second switch to the first terminal of the second switch, to connect the seventh terminal of the second switch to the second terminal of the second switch, to connect the eighth terminal of the second switch to the third terminal of the second switch, and to connect the nineth terminal of the second switch to the fourth terminal of the second switch, for transmitting, while transmitting to the first external electronic device the information in the first RF signal via a beam formed in accordance with providing the first RF signal with the first phase to the first antenna and providing the first RF signal with the second phase to the second antenna, to the second external electronic device the information in the second RF signal via a beam formed in accordance with providing the second RF signal with the fourth phase to the third antenna and providing the second RF signal with the fifth phase to the fourth antenna.

For example, the memory may further store instructions which, when executed by at least one processor, individually and/or collectively, control the first switch and the second switch to connect the sixth terminal of the second switch to the first terminal of the second switch, to connect the seventh terminal of the second switch to the second terminal of the second switch, to connect the eighth terminal of the second switch to the fifth terminal of the second switch connected to the third terminal of the first switch connected to the first terminal of the first switch, and to connect the nineth terminal of the second switch to the third terminal of the second switch, for transmitting, while transmitting to the first external electronic device the information in the first RF signal via a beam formed in accordance with providing the first RF signal with the first phase to the first antenna, providing the first RF signal with the second phase to the second antenna, and providing the first RF signal with the third phase to the third antenna, to the second external electronic device the information in the second RF signal via a beam formed in accordance with providing the second RF signal with the fourth phase to the fourth antenna.

For example, the memory may further store instructions which, when executed by at least one processor, individually and/or collectively, control the second switch to connect the sixth terminal of the second switch to the first terminal of the second switch, to connect the seventh terminal of the second switch to the second terminal of the second switch, to connect the eighth terminal of the second switch to the third terminal of the second switch, and to connect the nineth terminal of the second switch to the fourth terminal of the second switch, for transmitting to the first external electronic device the information in the first RF signal via a beam formed in accordance with providing, to the first antenna, the first RF signal with the first phase converted from the first signal identical to the second signal, providing, to the second antenna, the first RF signal with the second phase converted from the first signal identical to the second signal, providing, to the third antenna, the second RF signal with the fourth phase converted from the second signal identical to the first signal, and providing, to the fourth antenna, the second RF signal with the fifth phase converted from the second signal identical to the first signal.

For example, the memory may further store instructions which, when executed by at least one processor, individually and/or collectively, control the second switch to connect the sixth terminal of the second switch to the first

terminal of the second switch, to connect the seventh terminal of the second switch to the second terminal of the second switch, to connect the eighth terminal of the second switch to the third terminal of the second switch, and to connect the nineth terminal of the second switch to the fourth terminal of the second switch, for transmitting to the second external electronic device the information in the second RF signal via a beam formed in accordance with providing, to the first antenna, the first RF signal with the first phase converted from the first signal identical to the second signal, providing, to the second antenna, the first RF signal with the second phase converted from the first signal identical to the second signal, providing, to the third antenna, the second RF signal with the fourth phase converted from the second signal identical to the first signal, and providing, to the fourth antenna, the second RF signal with the fifth phase converted from the second signal identical to the first signal.

For example, the one or more switches may include a switch including a first terminal connected to the first output terminal, a second terminal connected to the second output terminal, a third terminal connected to the third output terminal, a fourth terminal connected to the fourth output terminal, a fifth terminal connected to the fifth output terminal, a sixth terminal connected to the sixth output terminal, a seventh terminal connected to the first antenna, an eighth terminal connected to the second antenna, a nineth terminal connected to the third antenna, and a tenth terminal connected to the fourth antenna.

For example, the switch may be configured to connect, to the first terminal of the switch, a terminal from among the seventh terminal of the switch, the eighth terminal of the switch, the nineth terminal of the switch, and the tenth terminal of the switch, and configured to connect, to the second terminal of the switch, a terminal from among the seventh terminal of the switch, the eighth terminal of the switch, the nineth terminal of the switch, and the tenth terminal of the switch, and configured to connect, to the third terminal of the switch, a terminal from among the seventh terminal of the switch, the eighth terminal of the switch, the nineth terminal of the switch, and the tenth terminal of the switch, and configured to connect, to the fourth terminal of the switch, a terminal from among the seventh terminal of the switch, the eighth terminal of the switch, the nineth terminal of the switch, and the tenth terminal of the switch, and configured to connect, to the fifth terminal of the switch, a terminal from among the seventh terminal of the switch, the eighth terminal of the switch, the nineth terminal of the switch, and the tenth terminal of the switch, and configured to connect, to the sixth terminal of the switch, a terminal from among the seventh terminal of the switch, the eighth terminal of the switch, the nineth terminal of the switch, and the tenth terminal of the switch.

For example, the memory may store instructions which, when executed by at least one processor individually and/or collectively, control the switch to connect, to the first terminal of the switch, the seventh terminal of the switch, to connect, to the fourth terminal of the switch, the eighth terminal of the switch, to connect, to the fifth terminal of the switch, the nineth terminal of the switch, and to connect, to the sixth terminal of the switch, the tenth terminal of the switch, for transmitting, while transmitting to a first external electronic device information in the first RF signal via a beam formed in accordance with providing the first RF signal with the first phase to the first antenna, to a second external electronic device information in the second RF signal via a beam formed in accordance with providing the second RF signal with the fourth phase to the second antenna, providing the second RF signal with the fifth phase to the third antenna, and providing the second RF signal with the sixth phase to the fourth antenna.

For example, the memory may further store instructions which, when executed by at least one processor, individually and/or collectively, control the switch to connect, to the first terminal of the switch, the seventh terminal of the switch, to connect, to the second terminal of the switch, the eighth terminal of the switch, to connect, to the fourth terminal of the switch, the nineth terminal of the switch, and to connect, to the fifth terminal of the switch, the tenth terminal of the switch, for transmitting, while transmitting to the first external electronic device the information in the first RF signal via a beam formed in accordance with providing the first RF signal with the first phase to the first antenna and providing the first RF signal with the second phase to the second antenna, to the second external electronic device the information in the second RF signal via a beam formed in accordance with providing the second RF signal with the fourth phase to the third antenna and providing the second signal with the fifth phase to the fourth antenna.

For example, the memory may further store instructions which, when executed by at least one processor, individually and/or collectively, control the switch to connect, to the first terminal of the switch, the seventh terminal of the switch, to connect, to the second terminal of the switch, the eighth terminal of the switch, to connect, to the third terminal of the switch, the nineth terminal of the switch, and to connect, to the fourth terminal of the switch, the tenth terminal of the switch, for transmitting, while transmitting to the first external electronic device the information in the first RF signal via a beam formed in accordance with providing the first RF signal with the first phase to the first antenna, providing the first RF signal with the second phase to the second antenna, and providing the first RF signal with the third phase to the third antenna, to the second external electronic device the information in the second RF signal via a beam formed in accordance with providing the second RF signal with the fourth phase to the fourth antenna.

For example, the memory may further store instructions which, when executed by at least one processor, individually and/or collectively, control the switch to connect, to the first terminal of the switch, the seventh terminal of the switch, to connect, to the second terminal of the switch, the eighth terminal of the switch, to connect, to the fourth terminal of the switch, the nineth terminal of the switch, and to connect, to the fifth terminal of the switch, the tenth terminal of the switch, the tenth terminal of the

switch, for transmitting to the first external electronic device the information in the first RF signal via a beam formed in accordance with providing, to the first antenna, the first RF signal with the first phase converted from the first signal identical to the second signal, providing, to the second antenna, the first RF signal with the second phase converted from the first signal identical to the second signal, providing, to the third antenna, the second RF signal with the fourth phase converted from the second signal identical to the first signal, and providing, to the fourth antenna, the second RF signal with the fifth phase converted from the second signal identical to the first signal.

For example, the memory may further store instructions which, when executed by at least one processor, individually and/or collectively, control the switch to connect, to the first terminal of the switch, the seventh terminal of the switch, to connect, to the second terminal of the switch, the eighth terminal of the switch, to connect, to the fourth terminal of the switch, the nineth terminal of the switch, and to connect, to the fifth terminal of the switch, the tenth terminal of the switch, for transmitting to the second external electronic device the information in the second RF signal via a beam formed in accordance with providing, to the first antenna, the first RF signal with the first phase converted from the first signal identical to the second signal, providing, to the second antenna, the first RF signal with the second phase converted from the first signal identical to the second signal, providing, to the third antenna, the second RF signal with the fourth phase converted from the second signal identical to the first signal, and providing, to the fourth antenna, the second RF signal with the fifth phase converted from the second signal identical to the first signal.

For example, the first phase of the first RF signal provided to the first antenna using the one or more switches for a transmission to a first external electronic device may correspond to a phase used for receiving a RF signal from the first external electronic device through the first antenna, the second phase of the first RF signal provided to the second antenna using the one or more switches for a transmission to the first external electronic device may correspond to a phase used for receiving a RF signal from the first external electronic device through the second antenna, the fourth phase of the second RF signal provided to the third antenna using the one or more switches for a transmission to a second external electronic device may correspond to a phase used for receiving a RF signal from the second external electronic device through the third antenna, and the fifth phase of the second RF signal provided to the fourth antenna using the one or more switches for a transmission to the second external electronic device may correspond to a phase used for receiving a RF signal from the second external electronic device through the fourth antenna.

For example, the electronic device may further comprise: first down-converting circuitry including a third input terminal configured to obtain a third RF signal having a seventh phase, a fourth input terminal configured to obtain the third RF signal having a eighth phase, a fifth input terminal configured to obtain the third RF signal having a nineth phase, and a seventh output terminal configured to output a third signal on a baseband converted from the third RF signal having the seventh phase, the third RF signal having the eighth phase, and the third RF signal having the nineth phase, and second down-converting circuitry including a sixth input terminal configured to obtain a fourth RF signal having a tenth phase, a seventh input terminal configured to obtain the fourth RF signal having an eleventh phase, an eighth input terminal configured to obtain the fourth RF signal having a twelfth phase, and a eighth output terminal configured to output a fourth signal on a baseband converted from the fourth RF signal having the tenth phase, the fourth RF signal having the eleventh phase, and the fourth RF signal having the twelfth phase. For example, the one or more switches may be for the first output terminal connectable to any one of the plurality of antennas, the second output terminal connectable to any one of the plurality of antennas, the third output terminal connectable to any one of the plurality of antennas, the fourth output terminal connectable to any one of the plurality of antennas, the fifth output terminal connectable to any one of the plurality of antennas, the sixth output terminal connectable to any one of the plurality of antennas, the third input terminal connectable to any one of the plurality of antennas, the fourth input terminal connectable to any one of the plurality of antennas, the fifth input terminal connectable to any one of the plurality of antennas, the sixth input terminal connectable to any one of the plurality of antennas, the seventh input terminal connectable to any one of the plurality of antennas, and the eighth input terminal connectable to any one of the plurality of antennas.

For example, a type of a portion of the plurality of antennas may be different from a type of another portion of the plurality of antennas.

For example, each of the first and second antennas may be a patch antenna, the third antenna may be a flexible printed circuit board (FPCB) antenna, and the fourth antenna may be an inverted F antenna (IFA).

As described above, an electronic device may comprise: a plurality of antennas including a first antenna, a second antenna, a third antenna, and a fourth antenna, first down-converting circuitry including a first input terminal configured to obtain a first radio frequency (RF) signal having a first phase, a second input terminal configured to obtain the first RF signal having a second phase, and a third input terminal configured to obtain the first RF signal having a third phase, and a first output terminal configured to output a first signal on a baseband converted from the first RF signal having the first phase, the first RF signal having the second phase, and the first RF signal having the third phase, second down-converting circuitry including a fourth input terminal configured to obtain a second RF signal having a fourth phase, a fifth input terminal configured to obtain the second RF signal having a fifth phase, and a sixth input terminal configured to obtain the second RF signal having a sixth phase, and a second output terminal configured to output a second signal on a baseband converted from the second RF signal with the fourth phase, the second RF signal having the fifth phase, and the second RF

signal having the sixth phase, and one or more switches for the first input terminal connectable to any one of the plurality of antennas, the second input terminal connectable to any one of the plurality of antennas, the third input terminal connectable to any one of the plurality of antennas, the fourth input terminal connectable to any one of the plurality of antennas, the fifth input terminal connectable to any one of the plurality of antennas, and the sixth input terminal connectable to any one of the plurality of antennas.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the

embodiment(s) described herein may be used in conjunction with any other embodiment(s) described herein.

## Claims

1. An electronic device comprising:

   a plurality of antennas including a first antenna, a second antenna, a third antenna, and a fourth antenna;
   first up-converting circuitry including: a first input terminal configured to obtain a first signal on a baseband, a first output terminal configured to output a first radio frequency (RF) signal having a first phase, a second output terminal configured to output the first RF signal having a second phase, and a third output terminal configured to output the first RF signal having a third phase, the first phase, the second phase, and the third phase being different from each other, the first RF signal being converted from the first signal;
   second up-converting circuitry including: a second input terminal configured to obtain a second signal on a baseband, a fourth output terminal configured to output a second RF signal having a fourth phase, a fifth output terminal configured to output the second RF signal having a fifth phase, and a sixth output terminal configured to output the second RF signal having a sixth phase, the fourth phase, the fifth phase, and the sixth phase being different from each other, the second RF signal being converted from the second signal; and
   one or more switches for the first output terminal connectable to any one of the plurality of antennas, the second output terminal connectable to any one of the plurality of antennas, the third output terminal connectable to any one of the plurality of antennas, the fourth output terminal connectable to any one of the plurality of antennas, the fifth output terminal connectable to any one of the plurality of antennas, and the sixth output terminal connectable to any one of the plurality of antennas.

2. The electronic device of claim 1, wherein the one or more switches are configured to respectively connect, the first antenna, the second antenna, the third antenna, and the fourth antenna, to any four of the first output terminal, the second output terminal, the third output terminal, the fourth output terminal, the fifth output terminal, and the sixth output terminal.

3. The electronic device of claim 1, wherein an antenna connected to the first output terminal through the one or more switches from among the plurality of antennas is configured to be disconnected through the one or more switches from the second output terminal, the third output terminal, the fourth output terminal, the fifth output terminal, and the sixth output terminal,

   wherein an antenna connected to the second output terminal through the one or more switches from among the plurality of antennas is configured to be disconnected through the one or more switches from the first output terminal, the third output terminal, the fourth output terminal, the fifth output terminal, and the sixth output terminal,
   wherein an antenna connected to the third output terminal through the one or more switches from among the plurality of antennas is configured to be disconnected through the one or more switches from the first output terminal, the second output terminal, the fourth output terminal, the fifth output terminal, and the sixth output terminal,
   wherein an antenna connected to the fourth output terminal through the one or more switches from among the plurality of antennas is configured to be disconnected through the one or more switches from the first output terminal, the second output terminal, the third output terminal, the fifth output terminal, and the sixth output terminal,
   wherein an antenna connected to the fifth output terminal through the one or more switches from among the plurality of antennas is configured to be disconnected through the one or more switches from the first output terminal, the second output terminal, the third output terminal, the fourth output terminal, and the sixth output terminal, and
   wherein an antenna connected to the sixth output terminal through the one or more switches from among the plurality of antennas is configured to be disconnected through the one or more switches from the first output terminal, the second output terminal, the third output terminal, the fourth output terminal, and the fifth output terminal.

4. The electronic device of claim 1, further comprising:
   memory storing instructions which, when executed by at least one processor, comprising processing circuitry, individually and/or collectively, cause the one or more switches to:

disconnect, from all of the first output terminal, the second output terminal, the third output terminal, the fourth output terminal, the fifth output terminal, and the sixth output terminal, the plurality of antennas;
form a first transmit (Tx) path between one of the plurality of antennas and one of the first output terminal, the second output terminal, the third output terminal, the fourth output terminal, the fifth output terminal, and the sixth output terminal;
while the first Tx path is formed, further form a second Tx path between another one of the plurality of antennas and another one of the first output terminal, the second output terminal, the third output terminal, the fourth output terminal, the fifth output terminal, and the sixth output terminal;
while the first Tx path and the second Tx path are formed, further form a third Tx path between also another one of the plurality of antennas and also another one of the first output terminal, the second output terminal, the third output terminal, the fourth output terminal, the fifth output terminal, and the sixth output terminal; and
while the first Tx path, the second Tx path, and the third Tx path are formed, further form a fourth Tx path between still also another one of the plurality of antennas and still also another one of the first output terminal, the second output terminal, the third output terminal, the fourth output terminal, the fifth output terminal, and the sixth output terminal.

**5.** The electronic device of claim 1, wherein the first up-converting circuitry includes:

a first up-converter including a seventh output terminal connected to the first output terminal to output the first RF signal having the first phase through the first output terminal, an eighth output terminal configured to output the first RF signal having the first phase, and a nineth output terminal configured to output the first RF signal having the first phase;
a first phase shifter configured to obtain the first RF signal having the first phase output from the eighth output terminal and obtain the first RF signal having the second phase by shifting the first phase of the first RF signal obtained from the eighth output terminal and respectively connected to the second output terminal and the eighth output terminal to output the first RF signal with the second phase through the second output terminal; and
a second phase shifter configured to obtain the first RF signal having the first phase output from the nineth output terminal and obtain the first RF signal having the third phase by shifting the first phase of the first RF signal obtained from the nineth output terminal and respectively connected to the third output terminal and the nineth output terminal to output the first RF signal having the third phase through the third output terminal, and
wherein the second up-converting circuitry includes:

a second up-converter including a tenth output terminal connected to the fourth output terminal to output the second RF signal having the fourth phase through the fourth output terminal, an eleventh output terminal configured to output the second RF signal having the fourth phase, and a twelfth output terminal configured to output the second RF signal having the fourth phase;
a third phase shifter configured to obtain the second RF signal having the fourth phase output from the eleventh output terminal and obtain the second RF signal having the fifth phase by shifting the fourth phase of the second RF signal obtained from the eleventh output terminal and respectively connected to the fifth output terminal and the eleventh output terminal to output the second RF signal having the fifth phase through the fifth output terminal; and
a fourth phase shifter configured to obtain the second RF signal having the fourth phase output from the twelfth output terminal and obtain the second RF signal with the sixth phase by shifting the fourth phase of the second RF signal obtained from the twelfth output terminal and respectively connected to the sixth output terminal and the twelfth output terminal to output the second RF signal having the sixth phase through the sixth output terminal.

**6.** The electronic device of claim 5, wherein the one or more switches includes:

a first switch including a first terminal connected to the third output terminal, a second terminal connected to the sixth output terminal, and a third terminal; and
a second switch including a first terminal connected to the first output terminal, a second terminal connected to the second output terminal, a third terminal connected to the fourth output terminal, a fourth terminal connected to the fifth output terminal, and a fifth terminal connected to the third terminal of the first switch, a sixth terminal connected to the first antenna, a seventh terminal connected to the second antenna, an eighth terminal connected to the third antenna, and a nineth terminal connected to the fourth antenna.

**7.** The electronic device of claim 6, wherein the first switch is configured to connect the third terminal of the first switch to a

terminal from among the first terminal of the first switch and the second terminal of the first switch, and wherein the second switch is configured to:

connect, to the first terminal of the second switch, a terminal from among the sixth terminal of the second switch, the seventh terminal of the second switch, the eighth terminal of the second switch, and the nineth terminal of the second switch;
connect, to the second terminal of the second switch, a terminal from among the sixth terminal of the second switch, the seventh terminal of the second switch, the eighth terminal of the second switch, and the nineth terminal of the second switch;
connect, to the third terminal of the second switch, a terminal from among the sixth terminal of the second switch, the seventh terminal of the second switch, the eighth terminal of the second switch, and the nineth terminal of the second switch;
connect, to the fourth terminal of the second switch, a terminal from among the sixth terminal of the second switch, the seventh terminal of the second switch, the eighth terminal of the second switch, and the nineth terminal of the second switch; and
connect, to the fifth terminal of the second switch, a terminal from among the sixth terminal of the second switch, the seventh terminal of the second switch, the eighth terminal of the second switch, and the nineth terminal of the second switch.

**8.** The electronic device of claim 7, further comprising:
memory storing instructions which, when executed by at least one processor, comprising processing circuitry, individually and/or collectively, control the first switch and the second switch to connect the sixth terminal of the second switch to the first terminal of the second switch, to connect the seventh terminal of the second switch to the third terminal of the second switch, to connect the eighth terminal of the second switch to the fourth terminal of the second switch, and to connect the nineth terminal of the second switch to the fifth terminal of the second switch connected to the third terminal of the first switch connected to the second terminal of the first switch, for transmitting, while transmitting to a first external electronic device information in the first RF signal via a beam formed in accordance with providing the first RF signal having the first phase to the first antenna, to a second external electronic device information in the second RF signal via a beam formed in accordance with providing the second RF signal having the fourth phase to the second antenna, providing the second RF signal having the fifth phase to the third antenna, and providing the second RF signal having the sixth phase to the fourth antenna.

**9.** The electronic device of claim 8, wherein the memory further stores instructions which, when executed by at least one processor, comprising processing circuitry, individually and/or collectively, control the second switch to connect the sixth terminal of the second switch to the first terminal of the second switch, to connect the seventh terminal of the second switch to the second terminal of the second switch, to connect the eighth terminal of the second switch to the third terminal of the second switch, and to connect the nineth terminal of the second switch to the fourth terminal of the second switch, for transmitting, while transmitting to the first external electronic device the information in the first RF signal via a beam formed in accordance with providing the first RF signal having the first phase to the first antenna and providing the first RF signal having the second phase to the second antenna, to the second external electronic device the information in the second RF signal via a beam formed in accordance with providing the second RF signal having the fourth phase to the third antenna and providing the second RF signal having the fifth phase to the fourth antenna.

**10.** The electronic device of claim 9, wherein the memory further stores instructions which, when executed by at least one processor, comprising processing circuitry, individually and/or collectively, control the first switch and the second switch to connect the sixth terminal of the second switch to the first terminal of the second switch, to connect the seventh terminal of the second switch to the second terminal of the second switch, to connect the eighth terminal of the second switch to the fifth terminal of the second switch connected to the third terminal of the first switch connected to the first terminal of the first switch, and to connect the nineth terminal of the second switch to the third terminal of the second switch, for transmitting, while transmitting to the first external electronic device the information in the first RF signal via a beam formed in accordance with providing the first RF signal having the first phase to the first antenna, providing the first RF signal having the second phase to the second antenna, and providing the first RF signal having the third phase to the third antenna, to the second external electronic device the information in the second RF signal via a beam formed in accordance with providing the second RF signal having the fourth phase to the fourth antenna.

**11.** The electronic device of claim 10, wherein the memory further stores instructions which, when executed by at least one processor, comprising processing circuitry, individually and/or collectively, control the second switch to connect the sixth terminal of the second switch to the first terminal of the second switch, to connect the seventh terminal of the

second switch to the second terminal of the second switch, to connect the eighth terminal of the second switch to the third terminal of the second switch, and to connect the nineth terminal of the second switch to the fourth terminal of the second switch, for transmitting to the first external electronic device the information in the first RF signal via a beam formed in accordance with providing, to the first antenna, the first RF signal having the first phase converted from the first signal corresponding to the second signal, providing, to the second antenna, the first RF signal having the second phase converted from the first signal corresponding to the second signal, providing, to the third antenna, the second RF signal having the fourth phase converted from the second signal corresponding to the first signal, and providing, to the fourth antenna, the second RF signal having the fifth phase converted from the second signal corresponding to the first signal.

**12.** The electronic device of claim 11, wherein the memory further stores instructions which, when executed by at least one processor, comprising processing circuitry, individually and/or collectively, control the second switch to connect the sixth terminal of the second switch to the first terminal of the second switch, to connect the seventh terminal of the second switch to the second terminal of the second switch, to connect the eighth terminal of the second switch to the third terminal of the second switch, and to connect the nineth terminal of the second switch to the fourth terminal of the second switch, for transmitting to the second external electronic device the information in the second RF signal via a beam formed in accordance with providing, to the first antenna, the first RF signal having the first phase converted from the first signal corresponding to the second signal, providing, to the second antenna, the first RF signal having the second phase converted from the first signal corresponding to the second signal, providing, to the third antenna, the second RF signal having the fourth phase converted from the second signal corresponding to the first signal, and providing, to the fourth antenna, the second RF signal having the fifth phase converted from the second signal corresponding to the first signal.

**13.** The electronic device of claim 5, wherein the one or more switches includes a switch including: a first terminal connected to the first output terminal, a second terminal connected to the second output terminal, a third terminal connected to the third output terminal, a fourth terminal connected to the fourth output terminal, a fifth terminal connected to the fifth output terminal, a sixth terminal connected to the sixth output terminal, a seventh terminal connected to the first antenna, an eighth terminal connected to the second antenna, a nineth terminal connected to the third antenna, and a tenth terminal connected to the fourth antenna.

**14.** The electronic device of claim 13, wherein the switch is configured to:

connect, to the first terminal of the switch, a terminal from among the seventh terminal of the switch, the eighth terminal of the switch, the nineth terminal of the switch, and the tenth terminal of the switch;
connect, to the second terminal of the switch, a terminal from among the seventh terminal of the switch, the eighth terminal of the switch, the nineth terminal of the switch, and the tenth terminal of the switch;
connect, to the third terminal of the switch, a terminal from among the seventh terminal of the switch, the eighth terminal of the switch, the nineth terminal of the switch, and the tenth terminal of the switch;
connect, to the fourth terminal of the switch, a terminal from among the seventh terminal of the switch, the eighth terminal of the switch, the nineth terminal of the switch, and the tenth terminal of the switch;
connect, to the fifth terminal of the switch, a terminal from among the seventh terminal of the switch, the eighth terminal of the switch, the nineth terminal of the switch, and the tenth terminal of the switch; and
connect, to the sixth terminal of the switch, a terminal from among the seventh terminal of the switch, the eighth terminal of the switch, the nineth terminal of the switch, and the tenth terminal of the switch.

**15.** The electronic device of claim 14, further comprising:
memory storing instructions which, when executed by at least one processor, comprising processing circuitry, individually and/or collectively, control the switch to connect, to the first terminal of the switch, the seventh terminal of the switch, to connect, to the fourth terminal of the switch, the eighth terminal of the switch, to connect, to the fifth terminal of the switch, the nineth terminal of the switch, and to connect, to the sixth terminal of the switch, the tenth terminal of the switch, for transmitting, while transmitting to a first external electronic device information in the first RF signal via a beam formed in accordance with providing the first RF signal having the first phase to the first antenna, to a second external electronic device information in the second RF signal via a beam formed in accordance with providing the second RF signal having the fourth phase to the second antenna, providing the second RF signal having the fifth phase to the third antenna, and providing the second RF signal having the sixth phase to the fourth antenna.

100
110
131
111
112
132
101

100
160
141
111
112
142
101

FIG. 1

101-1
210
201
211
FIRST
UP-CONVERTING
CIRCUIT
231
221-1
221-2
221-3
241
242
243
202
212
SECOND
UP-CONVERTING
CIRCUIT
232
222-1
222-2
222-3
244
245
246
221-1
221-2
221-3
222-1
222-2
222-3
ONE OR MORE
SWITCHES
291
292
293
294

FIG. 2

201 or 202
321 or 322
307 or 310
231 or 232
241 or 244
308 or 311
331 or 333
242 or 245
309 or 312
332 or 334
243 or 246

FIG. 3

201
LO(401)
425
cosθ2
426
421
493
491
cosθ1
417
413
411
415
sinθ2
422
sinθ1
419
211-1
221-1
241
221-2
242
418
414
412
416
221-3
243
420
211-2
-sinθ1
424
-sinθ2
492
cosθ1
494
cosθ2
427
428
423
LO(402)

FIG. 4

101-1
291
292
293
294

FIG. 5

101-2
613
633
ADC
641
651
614
634
ADC
642
652
602
602-1
291
630
MEMORY
602-6
602-2
613
614
616
617
611
631
DAC
231
201
FIRST UP-CONVERTING CIRCUIT
221-1
221-2
221-3
292
602-7
601
211
241
242
243
244
245
246
601-1
602-5
PROCESSOR
612
632
DAC
232
202
SECOND UP-CONVERTING CIRCUIT
222-3
601-2
601-3
293
602-8
611
612
212
222-2
222-1
294
602-4
602-9
620
617
637
ADC
645
655
602-3
616
636
ADC
644
654

FIG. 6

101-3
613
633
ADC
641
651
614
634
ADC
642
652
701
630
MEMORY
701-1
291
701-7
701-2
613
614
616
617
PROCESSOR
611
612
620
221-1
221-2
201
231
611
631
DAC
FIRST UP-
CONVERTING
CIRCUIT
221-3
211
241
242
243
244
245
246
202
232
612
632
DAC
SECOND UP-
CONVERTING
CIRCUIT
212
222-3
222-2
222-1
292
701-8
701-3
701-6
293
701-9
294
701-10
701-5
701-4
617
637
ADC
645
655
616
636
ADC
644
654

FIG. 7

101-4
801
811
FIRST
DOWN-CONVERTING
CIRCUIT
821-1
821-2
821-3
841
842
843
831
802
812
SECOND
DOWN-CONVERTING
CIRCUIT
822-1
822-2
822-3
844
845
846
832
810
ONE OR MORE
SWITCHES
821-1
821-2
821-3
822-1
822-2
822-3
291
292
293
294

FIG. 8

801 or 802
921 or 922
907 or 910
831 or 832
841 or 844
908 or 911
931 or 933
842 or 845
909 or 912
932 or 934
843 or 846

FIG. 9

801
LO(1091)
1003-1
1085
1081
cosθ2
cosθ1
811-1
1002-1
-sinθ2
-sinθ1
1001-1
821-1
841
1086
1082
821-2
842
1087
1083
821-3
-sinθ2
-sinθ1
843
811-2
1001-2
-cosθ2
-cosθ1
1002-2
1088
1084
1003-2
LO(1092)

FIG. 10

101-5
1130
MEMORY
PROCESSOR
1120
1111
1112
1113
1114
1133
ADC
811
801
FIRST DOWN-CONVERTING CIRCUIT
841
842
843
1131
DAC
211
201
FIRST UP-CONVERTING CIRCUIT
241
242
243
1132
DAC
212
202
SECOND UP-CONVERTING CIRCUIT
246
245
244
1134
ADC
812
802
SECOND DOWN-CONVERTING CIRCUIT
846
845
844
1151
1152
1155
1155-3
1155-1
1155-5
1155-2
1155-4
1154
1153
1101
1101-1
1101-2
1101-5
1101-4
1101-3
1101-6
1101-7
1101-8
1101-9
291
292
293
294
1100
1101
1155

FIG. 11

1200
ELECTRONIC DEVICE 1201
INPUT MODULE 1250
SOUND OUTPUT MODULE 1255
DISPLAY MODULE 1260
MEMORY 1230
VOLATILE MEMORY 1232
NON-VOLATILE MEMORY 1234
INTERNAL MEMORY 1236
EXTERNAL MEMORY 1238
PROGRAM 1240
APPLICATION 1246
MIDDLEWARE 1244
OPERATING SYSTEM 1242
BATTERY 1289
POWER MANAGE-MENT MODULE 1288
PROCESSOR 1220
MAIN PROCESSOR 1221
AUXILIARY PROCESSOR 1223
COMMUNICATION MODULE 1290
WIRELESS COMMUNICATION MODULE 1292
WIRED COMMUNICATION MODULE 1294
SUBSCRIBER IDENTIFICATION MODULE 1296
ANTENNA MODULE 1297
SECOND NETWORK 1299
ELECTRONIC DEVICE 1204
FIRST NETWORK 1298
AUDIO MODULE 1270
SENSOR MODULE 1276
HAPTIC MODULE 1279
CAMERA MODULE 1280
INTERFACE 1277
CONNECTING TERMINAL 1278
ELECTRONIC DEVICE 1202
SERVER 1208

FIG. 12

**INTERNATIONAL SEARCH REPORT**

International application No. **PCT/KR2024/015814**

**A. CLASSIFICATION OF SUBJECT MATTER**

**H04B 7/06**(2006.01)i; **H04B 1/04**(2006.01)i; **H01Q 3/36**(2006.01)i

According to International Patent Classification (IPC) or to both national classification and IPC

**B. FIELDS SEARCHED**

Minimum documentation searched (classification system followed by classification symbols)

H04B 7/06(2006.01); H01Q 21/00(2006.01); H01Q 21/06(2006.01); H04B 7/04(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향 변환 회로(up conversion circuitry), 위상(phase), 안테나(antenna), 스위치(switch), 빔(beam)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2018-0043272 A (BLUE DANUBE SYSTEMS, INC.) 27 April 2018 (2018-04-27)<br>See paragraphs [0035] and [0041]-[0043]; and figures 4 and 6-7. | 1-5,13-15<br>6-12 |
| Y | WO 2022-198670 A1 (HUAWEI TECHNOLOGIES CO., LTD.) 29 September 2022 (2022-09-29)<br>See page 8, lines 30-35; page 11, line 6 – page 12, line 5 and page 14, lines 17-19; and figures 5 and 10. | 1-5,13-15 |
| Y | KR 10-2013-0053797 A (SAMSUNG ELECTRONICS CO., LTD.) 24 May 2013 (2013-05-24)<br>See paragraphs [0070]-[0072]; and figures 4-5. | 13-15 |
| A | US 2023-0387998 A1 (HUAWEI TECHNOLOGIES CO., LTD.) 30 November 2023 (2023-11-30)<br>See paragraphs [0112]-[0161]; and figures 7-15B. | 1-15 |
| A | WO 2022-198395 A1 (NOKIA SHANGHAI BELL CO., LTD. et al.) 29 September 2022 (2022-09-29)<br>See paragraphs [0053]-[0075]; and figure 2. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/015814**

| Patent document cited in search report | Publication date (day/month/year) | Patent family member(s) | Publication date (day/month/year) |
|---|---|---|---|
| KR 10-2018-0043272 A | 27 April 2018 | CA 2992289 A1 | 26 January 2017 |
| | | EP 3326242 A1 | 30 May 2018 |
| | | EP 3326242 B1 | 02 March 2022 |
| | | JP 2018-523937 A | 23 August 2018 |
| | | JP 6889147 B2 | 18 June 2021 |
| | | US 10693221 B2 | 23 June 2020 |
| | | US 2017-0025749 A1 | 26 January 2017 |
| | | WO 2017-015430 A1 | 26 January 2017 |
| WO 2022-198670 A1 | 29 September 2022 | CN 116783838 A | 19 September 2023 |
| | | EP 4300841 A1 | 03 January 2024 |
| | | EP 4300841 A4 | 20 March 2024 |
| | | US 2024-0014876 A1 | 11 January 2024 |
| KR 10-2013-0053797 A | 24 May 2013 | EP 2781035 A1 | 24 September 2014 |
| | | EP 2781035 B1 | 24 April 2019 |
| | | US 10469137 B2 | 05 November 2019 |
| | | US 2013-0121342 A1 | 16 May 2013 |
| | | US 2017-0163317 A1 | 08 June 2017 |
| | | US 9614594 B2 | 04 April 2017 |
| | | WO 2013-073878 A1 | 23 May 2013 |
| US 2023-0387998 A1 | 30 November 2023 | CN 116868520 A | 10 October 2023 |
| | | EP 4280470 A1 | 22 November 2023 |
| | | EP 4280470 A4 | 20 March 2024 |
| | | WO 2022-170502 A1 | 18 August 2022 |
| WO 2022-198395 A1 | 29 September 2022 | CN 117099322 A | 21 November 2023 |
| | | EP 4315636 A1 | 07 February 2024 |
| | | US 2024-0195465 A1 | 13 June 2024 |

Form PCT/ISA/210 (patent family annex) (July 2022)